# EUROPEAN PATENT APPLICATION

(11) **EP 4 783 739 A1**
(43) Date of publication of application: **29.07.2026**
(21) Application number: 24868735.2
(22) Date of filing: 20.09.2024
(51) Int. Cl.: H05B 6/12, H05B 6/06, F24C 15/34, F24C 15/10, F24C 3/12, H02M 1/10

(54) **COIL MODULE AND HOME APPLIANCE COMPRISING COIL MODULE**

(30) Priority: 21.09.2023 KR 20230126657; 21.09.2023 KR 20230126658; 26.09.2023 KR 20230129155; 22.02.2024 KR 20240026117
(71) Applicant: LG Electronics Inc., Yeongdeungpo-gu Seoul 07336 (KR)
(72) Inventor: PARK, Kyungho, Seoul 08592 (KR); KIM, Eui Sung, Seoul 08592 (KR); MOON, Hyunwook, Seoul 08592 (KR)
(74) Representative: Ter Meer Steinmeister & Partner
(86) International application number: PCT/KR2024/014231
(87) International publication number: WO 2025/063759

(57) **Abstract**

The present disclosure relates to a coil module and a home appliance including the coil module. The coil module according to an embodiment may include a plurality of sensing coils formed by a plurality of second coil portions stacked in up and down directions; and a plurality of wirings electrically connecting a third terminal with the respective sensing coils. In an embodiment, the widths of the respective wirings may be set to be proportional to the lengths of the respective wirings.

## Description

### Technical Field

The present disclosure relates to a coil module and a home appliance including the coil module.

### Background Art

Recently, various home appliances are being used to make human life more convenient. Examples of home appliances include cooking appliances, refrigerators, washing machines, clothes dryers, clothes management machines, water purifiers, and the like.

The cooking appliance, one of the home appliances, is a type of home appliance for cooking food, which is installed in the kitchen space and cooks food according to the user's intention. The cooking appliance may be classified into various categories based on the type or kind of heat source or fuel used.

When classifying the cooking appliance based on a method of cooking the food, the cooking appliance may be classified into an open cooking appliance and a closed cooking appliance depending on a type of a space where the food is placed. Examples of the closed cooking appliance include an oven, a microwave, and the like, while examples of the open cooking appliance include a cooktop, a hob, and the like.

Among the open cooking appliances, the cooktop is provided to be capable of heating food contained in a cooking container through at least one burner. The cooktop may be provided in a form having a burner using electricity, or may be provided in a form having a burner using gas. Additionally, the cooktop may be implemented as a standalone unit, as well as in the form of an oven range including an oven underneath the cooktop.

As an example of a cooktop having a burner using electricity, there is an induction heating device. The induction heating device is a cooking appliance that performs a cooking function in an induction heating method. In the induction heating device, when a current is applied to a working coil, eddy current is generated in the cooking container made of a magnetic material, and food may be cooked by the cooking container that generates heat by acting as a resistance to the eddy current.

The induction heating device does not require combustion of gas and therefore does not produce combustion exhaust gases. Furthermore, by allowing the container itself to generate heat immediately, the induction heating device can minimize the transfer process through heat radiation or conduction, thus being capable of heating the cooked food at a high speed.

Typically, in the induction heating device, the position where the cooking container is to be placed is marked on the top plate above the working coil, and the cooking container is heated by the working coil in a state in which the cooking container is placed in the marked area.

In the induction heating device, one or more working coils and circuit boards may be provided. The working coil serves to transmit electromagnetic force to the cooking container. In general, the working coil may be formed in the form of a wire wound in a spiral shape. And the circuit board may play a role in controlling the supply of the induction current to the working coil in a circuit manner.

Recently, instead of a working coil in the form of a wire wound in a spiral shape, a working coil in the form of a coil pattern formed on a circuit board is also used.

Among the costs and time required to manufacture the induction heating device, the cost and time spent on manufacturing the working coil account for a large proportion. Among these, the cost of the wire and the cost and time required to wind the wire are significant.

If the working coil is formed in the form of forming a coil-shaped pattern on a circuit board instead of forming a working coil by winding a wire, the cost and time spent on manufacturing the working coil can be reduced.

To the working coil, high frequency power is applied, and thereby, considerable heat is generated in the working coil. Particularly in the induction heating device that requires high power, a lot of heat is generated in the working coil as the high power is applied.

In a case where a working coil is formed in the form of forming a coil-shaped pattern on a circuit board, due to the limited area of the circuit board, the working coil is inevitably formed in a form in which coil patterns are concentrated in a narrow area of the circuit board. As a result, the circuit board on which the working coil is formed may be inevitably subjected to a lot of heat relative to its area, and thereby, the temperature of the circuit board may increase excessively.

Meanwhile, recently, an induction heating device has been developed that automatically recognizes the size and location of a cooking container and performs heating in an appropriate manner even if the seating position of the cooking container is not placed in a specific location. In order for the heating in the induction heating device to be performed more effectively, the number of working coils provided in the induction heating device needs to be increased.

Therefore, due to the temperature rise problem caused by the concentration of coil patterns, there is a difficulty for the working coil in the form of a coil pattern to be applied to the above-described type of induction heating device.

### Disclosure of the invention

### Technical Problem

The purpose of the present disclosure is to provide a coil module and a home appliance including the coil module, whose structure is improved to suppress the temperature rise.

Also, the purpose of the present disclosure is to provide a coil module and a home appliance including the coil module, whose structure is improved to increase the density of the area occupied by the working coil within a cooktop.

Also, the purpose of the present disclosure is to provide a coil module and a home appliance including the coil module, whose structure is improved to allow the working coils to be disposed more densely while suppressing the temperature rise of the working coils.

Also, the purpose of the present disclosure is to provide a working coil and a home appliance including the coil module, whose structure is improved to reduce the loss of the original substrate used to manufacture the coil substrate portion while increasing the density of the area occupied by the working coil within a cooktop.

Also, the purpose of the present disclosure is to provide a coil module and a home appliance including the coil module, whose structure is improved to simplify the connection structure between the working coil and the electronic unit.

Also, the purpose of the present disclosure is to provide a coil module and a home appliance including the coil module, whose structure is improved to suppress the decrease in the pattern cross-sectional area per turn of the working coil caused by the foil loss generated during the coil pattern formation process.

Also, the purpose of the present disclosure is to reduce power loss occurring during the operation of a home appliance and to increase power efficiency.

Also, the purpose of the present disclosure is to alleviate the phenomenon in which the temperature of a specific area of the working coil becomes excessively higher than that of other areas during the operation of a home appliance.

Also, the purpose of the present disclosure is to equalize the resistances of the wirings connecting a power supply unit with sensing coils.

Also, the purpose of the present disclosure is to reduce the resistance of a sensing coil or a wiring.

The purposes of the present disclosure are not limited to the purposes mentioned above, and other purposes and advantages of the present disclosure which are not mentioned will be more clearly appreciated by the embodiments of the present disclosure described below. Furthermore, the purposes and advantages of the present disclosure can be realized by the components described in the claims and combinations thereof.

### Means for Solving Problems

The coil module according to an embodiment may include a plurality of sensing coils formed by a plurality of second coil portions stacked in up and down directions; and a plurality of wirings electrically connecting a third terminal with the respective sensing coils.

In an embodiment, a width of each of the wirings may be set to be proportional to a length of each of the wirings.

In an embodiment, a width of each of the wirings may be set as a value obtained by multiplying a ratio of a length of each of the wirings to a length of a predetermined reference wiring by a width of the reference wiring.

In an embodiment, a length or a width of each of the wirings may be set differently according to a distance between the third terminal and each of the sensing coils.

In an embodiment, a length or a width of each of the wirings may be proportional to a distance between the third terminal and each of the sensing coils.

In an embodiment, the coil module may further include a conductive coating layer covering at least a portion of the plurality of sensing coils or the plurality of wirings disposed on an outermost surface of the coil module; and an insulating coating layer covering a remaining portion in the outermost surface of the coil module except for the plurality of sensing coils or the plurality of wirings.

In an embodiment, the conductive coating layer may be formed after the insulating coating layer is formed on the outermost surface of the coil module and the insulating coating layer covering the plurality of sensing coils or the plurality of wirings is removed.

In an embodiment, the respective second coil portions formed on different layers may be electrically connected with each other by a plurality of vias electrically separated from each other.

In an embodiment, the respective second coil portions formed on different layers may be connected in parallel by the plurality of vias.

In an embodiment, the plurality of wirings may be disposed on a same layer as the sensing coil.

A home appliance according to an embodiment may include a coil module.

In an embodiment, the coil module includes a plurality of working coils formed by a plurality of first coil portions stacked in up and down directions; a plurality of sensing coils formed by a plurality of second coil portions stacked in up and down directions; a plurality of first wiring patterns electrically connecting a first terminal with the respective working coils; a plurality of second wiring patterns electrically connecting a second terminal with the respective working coils; and a plurality of third wiring patterns electrically connecting a third terminal with the respective sensing coils. may include

In an embodiment, a width of each wiring included in each of the third wiring patterns may be set to be proportional to a length of each of the wirings.

In an embodiment, a width of each wiring included in each of the third wiring patterns may be set as a value obtained by multiplying a ratio of a length of each wiring to a length of a predetermined reference wiring by a width of the reference wiring.

In an embodiment, a length or a width of each wiring included in each of the third wiring patterns may be set differently according to a distance between the third terminal and each of the sensing coils.

In an embodiment, a length or a width of each wiring included in each of the third wiring patterns may be proportional to a distance between the third terminal and each of the sensing coils.

In an embodiment, the home appliance may further include a conductive coating layer covering at least a portion of the plurality of sensing coils or the plurality of wirings disposed on an outermost surface of the coil module; and an insulating coating layer covering a remaining portion in the outermost surface of the coil module except for the plurality of sensing coils or the plurality of wirings.

In an embodiment, the conductive coating layer may be formed after the insulating coating layer is formed on the outermost surface of the coil module and the insulating coating layer covering the plurality of sensing coils or the plurality of wirings is removed.

In an embodiment, the respective second coil portions formed on different layers may be electrically connected with each other by a plurality of vias electrically separated from each other.

In an embodiment, the respective second coil portions formed on different layers may be connected in parallel by the plurality of vias.

In an embodiment, each wiring included in each of the third wiring patterns may be disposed on a same layer as the sensing coil.

### Advantageous Effects

According to embodiments, a plurality of coil patterns stacked in the up and down directions are connected to each other in the up and down directions to form a working coil in the form of a pattern coil, thereby increasing the length of the working coil in the up and down direction, so that the pattern cross-sectional area per turn of the working coil can be effectively increased.

According to embodiments, by suppressing the increase in the size of the working coil in the horizontal direction and increasing the pattern cross-sectional area per turn of the working coil, it is possible to effectively suppress the temperature rise of the working coil.

According to embodiments, since the outer shape of the working coil formed in a polygonal shape similar to the outer shape of the cooktop is formed in a polygonal shape similar to the outer shape of the coil module, it is possible to effectively improve the density of the area occupied by the working coil within the cooktop.

According to embodiments, it is possible to increase the heating efficiency of the home appliance by increasing the area of the region where the container is in contact with the working coil.

According to embodiments, a plurality of coil lines stacked in the up and down directions are connected to each other in the up and down directions to form a working coil, and a horizontal direction twist structure and an up-and-down direction twist structure are formed in the working coil, so that it is possible to minimize the increase in the horizontal size of the working coil while increasing the pattern cross-sectional area per turn of the working coil.

According to embodiments, by reducing the size of the working coil while lowering the density of the current flowing in the working coil, it is possible to allow the working coils to be disposed more closely together compared to a cooktop of the same standard, and to maintain maximum output for a longer period of time compared to a cooktop of the same size.

According to embodiments, by using the densely disposed small working coils, it is possible to provide more improved heating efficiency as well as to provide higher output for a longer period of time.

According to embodiments, by allowing the coil assembly to be made of a combination of a plurality of coil modules, the loss of the original substrate used to manufacture the coil module can be reduced, and the space required to dispose the control panel on the cooktop can be effectively secured.

According to embodiments, a wiring for connecting the working coil and the sensing coil to the terminal part is formed in the form of being patterned in the coil module itself, and the connection of the working coil and the sensing coil with the electronic unit can be made only by the connection between the terminal part and the electronic unit. Accordingly, a connection structure between the electronic unit and both the working coil and the sensing coil can be formed very simply.

According to embodiments, in addition to allowing the connection work between the coil assembly and the electronic unit to be done easily and quickly, it is possible to effectively prevent that the accommodation space inside the cooktop, in which the coil assembly and the electronic unit are accommodated, becomes complicated due to a large number of wirings.

According to embodiments, since the proximity effect and the skin effect of the coil strand included in the working coil are reduced, the current distribution and magnetic flux density distribution of the working coil can become more uniform.

According to embodiments, it is possible to reduce power loss occurring during the operation of a home appliance and to increase power efficiency.

According to embodiments, it is possible is to alleviate the phenomenon in which the temperature of a specific area of the working coil becomes excessively higher than that of other areas during the operation of a home appliance.

According to embodiments, it is possible to equalize the resistances of the wirings connecting a power supply unit with sensing coils.

According to embodiments, it is possible to reduce the resistance of a sensing coil or a wiring.

### Brief Description of Drawings

FIG. 1 is a perspective view illustrating a home appliance according to an embodiment.
FIG. 2 is a plan view separately showing a cooktop shown in FIG. 1.
FIG. 3 is a view showing the indicator lamp lighting status of the cooktop shown in FIG. 2.
FIG. 4 is an exploded perspective view showing an exploded state of the cooktop shown in FIG. 2.
FIG. 5 is a view showing a state in which electronic components are installed on the bottom surface of a supporter shown in FIG. 4.
FIG. 6 is a plan view schematically showing the configuration of a coil assembly shown in FIG. 4.
FIG. 7 is a cross-sectional view schematically showing a stacked structure of a coil module shown in FIG. 6.
FIG. 8 is a plan view showing a first example of a layout structure of a first coil module and a second coil module.
FIG. 9 is a view schematically illustrating an example of the cutting state of an original substrate for forming a first coil substrate portion.
FIG. 10 is a plan view showing a second example of a layout structure of a first coil module and a second coil module.
FIG. 11 is a plan view showing another example of a layout structure of a first coil module and a second coil module shown in FIG. 8.
FIG. 12 is a plan view showing another example of a layout structure of a first coil module and a second coil module shown in FIG. 10.
FIG. 13 is a plan view showing a third example of a layout structure of a first coil module and a second coil module.
FIG. 14 is a plan view showing a fourth example of a layout structure of a first coil module and a second coil module.
FIG. 15 is a plan view showing a fifth example of a layout structure of a first coil module and a second coil module.
FIG. 16 is a plan view showing a sixth example of a layout structure of a first coil module and a second coil module.
FIG. 17 is a plan view showing an example of a first coil substrate portion of an embodiment.
FIG.18 an enlarged view illustrating a portion of the first coil substrate portion shown in FIG. 17.
FIG. 19 is a cross-sectional view schematically showing a stacked structure of a first coil portion shown in FIG. 18.
FIG. 20 is a plan view showing an example of the layout structure of a sensing coil.
FIG. 21 is an enlarged view of part "21" in FIG. 20, which shows an example of a layout structure of a sensing coil with respect to a working coil.
FIG. 22 is an enlarged view of a first terminal shown in FIG. 18.
FIG. 23 is an enlarged view of a second terminal shown in FIG. 18.
FIG. 24 is a plan view showing a seventh example of a layout structure of a first coil module and a second coil module.
FIG. 25 is a block diagram schematically illustrating a power supply-related configuration of a home appliance according to an embodiment.
FIG. 26 is a circuit diagram of a home appliance according to an embodiment.
FIG. 27 is a plan view showing a structure of a working coil according to an embodiment.
FIG. 28 is a cross-sectional view showing an example of a stacked structure of a second outer layer part and a second coil substrate portion.
FIG. 29 is a plan view showing an illustrative structure of a second coil portion disposed on an outermost surface of the coil module shown in FIG. 28.
FIG. 30 is a plan view showing an illustrative structure of a second coil portion disposed on the bottom of the adhesive material shown in FIG. 28.
FIG. 31 is a view illustrating a state in which an insulating coating layer is covered on an outermost surface of a coil module according to an embodiment.
FIG. 32 is a cross-sectional view illustrating an example of a stacked structure of the coil module shown in FIG. 31.
FIG. 33 is a cross-sectional view illustrating another example of a stacked structure of the coil module shown in FIG. 31.
FIG. 34 is a view illustrating a process of forming an insulating coating layer and a conductive coating layer on an outermost surface of a coil module according to an embodiment.
FIG. 35 is a view showing an electrical connection structure between second coil portions disposed on different layers according to an embodiment.
FIG. 36 is a view showing an electrical connection structure between second coil portions disposed on different layers according to another embodiment.
FIG. 37 is a circuit diagram of a sensing circuit according to an embodiment.
FIG. 38 is a diagram illustrating a waveform of a resonance signal output from an output node of a sensing circuit according to an embodiment.
FIG. 39 is a diagram illustrating a waveform of a square wave output from a comparator of a sensing circuit according to an embodiment.

### Embodiments for Implementing Invention

The purposes, features and advantages described above will be described in detail below with reference to the accompanying drawings, so that a person having ordinary knowledge in the technical field to which the present disclosure pertains can easily practice the technical idea of the present disclosure. In describing the present disclosure, if it is determined that a detailed description of a known technology related to the present disclosure may unnecessarily obscure the gist of the present disclosure, the detailed description thereof will be omitted. Hereinafter, preferred embodiments of the present disclosure will be described in detail with reference to the accompanying drawings. In the drawings, like reference numerals are used to refer to like or similar components.

Although the terms "first", "second", and so on are used to describe various components, these components are not limited by these terms. These terms are merely used to distinguish one component from another component, and unless specifically stated to the contrary, it should be understood that a first component may also be a second component.

The present disclosure may not be limited to embodiments disclosed below, and various changes may be made and the present disclosure may be implemented in various different forms. The present embodiment is provided solely to ensure that the disclosure of the present disclosure is complete and to fully inform those skilled in the art of the scope of the invention. Therefore, it should be understood that the present disclosure is not limited to the embodiments disclosed below, but includes all changes, equivalents or substitutes included in the technical idea and the scope of the present disclosure, as well as substitution of components of an embodiment with components of another embodiment and addition of components.

The attached drawings are only for easy understanding of the embodiments disclosed herein, and the technical ideas disclosed herein are not limited by the attached drawings. Further, it should be understood that the present disclosure includes all modifications, equivalents or substitutions that fall within the technical concept and scope of the present disclosure. In drawings, components may be expressed exaggeratedly large or small in size or thickness for convenience of understanding or the like, but the scope of protection of the present disclosure should not be interpreted as limited by the same.

The terms used herein are merely used to describe specific implementations or embodiments, and are not intended to limit the present disclosure. Further, singular expressions include plural expressions, unless the context clearly dictates otherwise. Herein, terms such as "comprise", "include", "have", "be provided with", "composed of", and the like are intended to indicate the existence of features, numbers, steps, operations, components, parts, or combinations thereof described herein. That is to say, it should be understood that terms such as "comprise", "include", "have", "be provided with", "composed of", and the like as used herein do not exclude in advance the presence or addition of one or more other features, numbers, steps, operations, components, parts, or combinations thereof.

Terms including ordinal numbers, such as first, second, and the like, may be used to describe various components, but the components are not limited by the terms. The above terms are used only for the purpose of distinguishing one component from another.

When a first component is described as being "connected" or "coupled" to a second component, it should be understood that the components may be directly connected or coupled to each other, but a third component may be interposed between the components. On the other hand, when it is described that the first component is "directly connected" or "directly coupled" to the second component, it should be understood that there are no other components interposed therebetween.

When a component is described to be "on top of" or "under" another component, it is understood that the component may be disposed in contact with a top surface (or a bottom surface) of the other component, as well as that still another component may be interposed therebetween.

Unless otherwise defined, all terms used herein, including technical or scientific terms, have the same meaning as commonly understood by a person of ordinary skill in the technical field to which the present disclosure pertains. Terms defined in commonly used dictionaries should be interpreted as having a meaning consistent with the meaning in the context of the related technology, and unless explicitly defined in the present application, should not be interpreted in an ideal or excessively formal sense.

When the appliance is placed on the floor, the direction in which the door is installed is defined as forward based on the center of the home appliance. Therefore, the direction of entering the inside of the appliance after opening the door is rearward. And, the horizontal direction perpendicular to the front and rear directions of the home appliance, that is, the width direction of the home appliance when looking at the home appliance from before the door of the home appliance may be referred to as the left and right directions.

For convenience, the left and right directions may be referred to as a first direction. Then, a right side may be referred to as one side in the first direction, and a left side may be referred to as the other side in the first direction.

Additionally, the width direction of the home appliance may be referred to as the lateral direction. Then, a right side may be referred to as one side in the lateral direction, and a left side may be referred to as the other side in the lateral direction.

Additionally, the direction of gravity may be defined as a down direction, and a direction opposite to the direction of gravity may be defined as an up direction.

For convenience, the direction toward the front and the rear may be referred to as the second direction. Then, the front side may be referred to as one side in the second direction, and the rear side may be referred to as the other side in the second direction.

Additionally, the up and down directions described above may be referred to as a third direction. Then, the up direction may be referred to as one side in the third direction, and the down direction may be referred to as the other side in the third direction.

Additionally, the up and down directions described above may be referred to as a vertical direction. Then, both the front and rear direction and left and right direction, that is, both the first direction and the second direction may be referred to as a horizontal direction.

Throughout the present document, "A and/or B" means A, B, or A and B, unless otherwise specified, and "C to D" means equal to or greater than C and equal to or smaller than D unless otherwise specified.

### [Overall structure of home appliance]

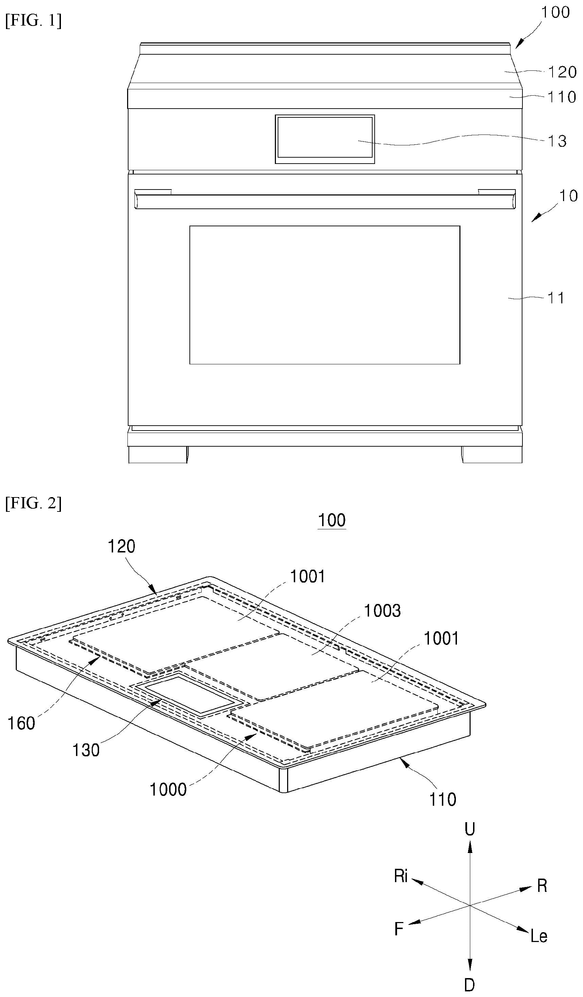

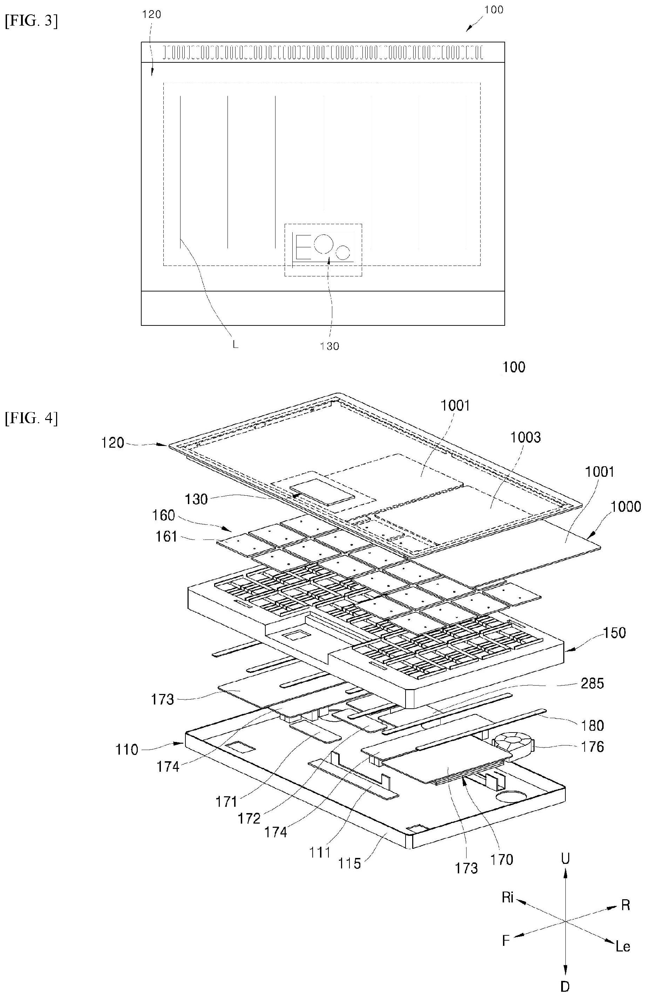

FIG. 1 is a perspective view illustrating a home appliance according to an embodiment; FIG. 2 is a plan view separately showing a cooktop shown in FIG. 1; and FIG. 3 is a view showing the indicator lamp lighting status of the cooktop shown in FIG. 2.

Referring to FIGS. 1 to 3, the home appliance according to an embodiment may include the cooktop 100. Additionally, the home appliance according to an embodiment may further include an oven part 10. In the embodiment shown in FIGS. 1 to 3, the home appliance is, for example, implemented in the form of an oven range.

The home appliance according to an embodiment provided in the form of an oven range can provide both the function of an oven, which is a closed home appliance, and the function of a cooktop, which is an open home appliance. The home appliance may include the oven part 10 and the cooktop 100.

The oven part 10 may have a cooking chamber formed therein. In the oven part, food can be cooked as the inside of the cooking chamber is heated.

In the oven part 10, a heating part may be provided to heat the cooking chamber. The heating part may be provided as a heating device using gas fuel, or may be provided as a heater using electricity.

In the home appliance, a door 11 may be rotatably provided to selectively open and close the cooking chamber. As an example, the door may be provided in the form of opening and closing the cooking chamber in a pull-down manner in which the upper end pivots up and down around the lower end thereof.

In the front surface upper portion of the home appliance, a control panel 13 (hereinafter, referred to as a "main control panel") may be provided. The main control panel 13 may form a part of the front surface exterior of the home appliance. The main control panel 13 may be provided with various switches for adjusting the operation of the home appliance, a display for displaying the operation state of the home appliance, and the like.

In the upper side of the oven part 10, the cooktop 100 may be disposed. The cooktop is provided to heat food or a container containing food placed on the top of the cooktop 100.

### [Overall structure of cooktop]

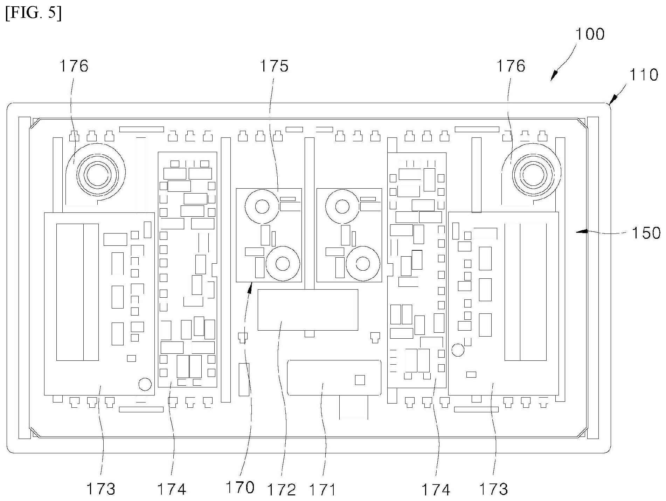

FIG. 4 is an exploded perspective view showing an exploded state of the cooktop shown in FIG. 2, and FIG. 5 is a view showing a state in which electronic components are installed on the bottom surface of a supporter shown in FIG. 4.

Referring to FIGS. 1 to 5, the cooktop 100 may include a case 110 and a top plate 120. In an embodiment, the exterior of the cooktop 100 may be formed by the case 110 and the top plate 120. The case 110 may be disposed in the lower side of the top plate 120, and may form a front surface, a rear surface, side surfaces, and a bottom surface of the cooktop. The top plate 120 may be disposed on an upper end of the cooktop 100, and may form a top surface exterior of the cooktop 100.

In the inside of the case 110, an accommodation space may be formed. The accommodation space formed in the inside of the case 110 may be opened toward the upper side. As an example, the case 110 may be formed in a hexahedral shape with an open upper side. In the accommodation space surrounded by the top plate 120 and the case 110, various internal components may be accommodated to constitute the cooktop 100.

In an embodiment, the case 110 may include a bottom portion 111. The bottom portion 111 may form a bottom surface of the case 110 to define a lower boundary surface of the accommodation space. The bottom portion 111 may be disposed under the top plate 120 to form a plane parallel to the top plate 120.

Additionally, the case 110 may include a side wall portion 113. The side wall portion 113 may form the front surface, the rear surface, and both side surfaces of the case 110 to be formed in a vertical wall shape extending upward from an edge of the bottom portion 111. The side wall portion 113 may define a horizontal boundary surface of the accommodation space.

Additionally, the cooktop 100 may be provided with a heating part for heating food to be cooked or a container containing the food. The heating part may be provided with at least more than one burner. For example, the burner may be provided in a form of including a working coil or a heating wire coil using electricity.

In this embodiment, the cooktop 100 is illustrated as being provided in the form of an induction heating device. The burner of the cooktop 100 may include a working coil. The burner including the working coil may be operated by an alternating current provided by the inverter to generate a magnetic field. The magnetic field generated in the burner including the working coil can generate an eddy current in the container. The container may be heated by an eddy current, and as the container is heated, the food contained in the container may be heated.

The cooktop 100 according to an embodiment may be provided with a control panel 130. The control panel 130 may be disposed in the top plate 120. The control panel 130 may be provided with a manipulation part including various switches for adjusting the operation of the cooktop 100, a display for displaying the operation state of the cooktop 100, and the like.

The cooktop 100 may be provided with a plurality of indicator lamps L. The indicator lamp L may be indicated in the top plate 120 of the cooktop. The indicator lamp L may indicate information such as the presence or absence of a container, the location of the container, the heating state of the container, or the temperature of the container.

The cooktop 100 according to an embodiment may include a coil assembly 1000. The coil assembly 1000 may be provided to constitute the heating part of the cooktop 100, and may be disposed in an accommodation space inside the cooktop 100.

Additionally, the cooktop 100 may include a supporter 150. The supporter 150 may be disposed in the lower side of the top plate 120. The supporter 150 may be disposed in a space surrounded by the top plate 120 and the case 110, that is, the accommodation space.

The supporter 150 may form a frame for supporting various internal components constituting the cooktop 100 in the inside of the cooktop 100. For example, the supporter 150 may be formed in a hexahedral shape with an open lower side. For example, the supporter 150 may be formed approximately in a shape of an upside-down version of the case 110 to have a size slightly smaller than that of the case 110.

In an embodiment, the accommodation space may be formed in the inside of the supporter 150 to be formed as a space surrounded by the bottom portion 111 of the case 110 and the supporter 150. That is, various internal components constituting the cooktop 100 may be accommodated in the inside of the supporter 150.

In an embodiment, the supporter 150 may also provide a coil base function. That is, on the supporter 150 a ferrite core 160 may be installed, and the coil assembly 1000 may be installed on the upper side of the supporter 150 on which the ferrite core 160 is installed in this way.

As an example, the ferrite core 160 may be formed by a combination of a plurality of ferrite modules 161 provided as separate elements. That is, the ferrite core 160 may be provided in a structure in which it may be separated into a plurality of ferrite modules 161.

In the present embodiment, the ferrite modules 161 are illustrated as each being provided to be coupled to the supporter 150. To this end, the supporter 150 may have a structure formed therein for the fitting with the ferrite modules 161. Each ferrite module 161 may be coupled to the supporter 150 by being fitted into the structure.

Each ferrite module 161 includes ferrite capable of forming a magnetic field around the ferrite module 161. As an example, each ferrite module 161 may be provided in a form in which ferrite is insert-injected.

According to the ferrite core 160 formed by a combination of the plurality of ferrite modules 161 provided as described above, the number of work hours required to install the ferrite core 160 in the cooktop 100 can be reduced. Additionally, the ferrite core 160 has the advantage in that, if a portion of the ferrite core 160 is damaged, its repair can be done by replacing the ferrite module 161 corresponding to that portion.

Each of the indicator lamps L may be implemented by a lighting module 180. The lighting module 180 is provided to emit light toward a light display area of the top plate 120. As an example, the indicator lamp L may be implemented by light irradiated by the lighting module 180 to the light display area of the top plate 120.

In this embodiment, the light display area is an area in which light emitted from the lighting module 180 can be recognized from the outside through the top plate 120, that is, an area in which light emitted from the lighting module 180 is irradiated from on the top plate 120, and is defined as a predetermined partial area of the entire area of the top plate 120.

As an example, the light display area may be a virtual area designated as a portion where light emitted from the lighting module 180 is to be irradiated from on the top plate 120. In this case, the light display area is not a part noticeably marked on the top plate 120 by a method such as performing a separate surface treatment on the surface of the top plate 120, but only a virtual area.

As another example, the light display area may be an area noticeably marked on the top plate 120 by a method such as performing a separate surface treatment on the surface of the top plate 120.

The lighting module 180 may include a light source. As an example, an LED may be applied as a light source, but the kind of light source applicable as a light source is not limited to an LED.

The lighting module 180 may include a plurality of light sources, which may be disposed in each lighting module 180 to be spaced apart from each other by a predetermined interval in front and rear directions. As an example, the lighting module 180 may be provided in a form in which a plurality of light sources are mounted on a PCB in the form of a PCB. The number of light sources for each lighting module 180 and the length of the PCB in front and rear directions may be appropriately set according to the size or intensity of the lighting to be implemented through the lighting module 180.

Additionally, a plurality of lighting modules 180 may be disposed in the cooktop, and the plurality of lighting modules 180 may be disposed to be spaced apart from each other by a predetermined interval in the lateral direction. The number of lighting modules 180 and the distance between the lighting modules 180 may be appropriately set by considering the size of the working coil and number of the working coils, the distance between the working coils, and the like.

At least a portion of the lighting module 180 may be disposed between the supporter 150 and the bottom portion 111. As an example, the lighting module 180 may be disposed in the accommodation space. More specifically, the lighting module 180 may be disposed in a space surrounded by the bottom portion 111 of the case 110 and the supporter 150.

In the inside of the cooktop 100, that is, in the accommodation space, various electronic components may be installed. For example, in the inner space of the cooktop 100, a main PCB 171, a switching mode power supply (SMPS), an inverter PCB, a resonance PCB (Resonant PCB) 164, a noise filter (EMI filter) 165, a fan 176, and the like may be disposed.

Hereinafter, the electronic components will be collectively referred to as an electronic unit 170. The electronic unit 170 may include at least one of a power processing part and a coil controlling part. The power processing part may be provided to supply power to the coil assembly 1000, and the power processing part may include the switching mode power supply (SMPS) 162, the noise filter (EMI filter 165), and the like. The coil controlling part is provided to control the operation of the coil assembly 1000, and the coil controlling part may include an inverter PCB 174, and the like.

### [Overall structure of coil assembly]

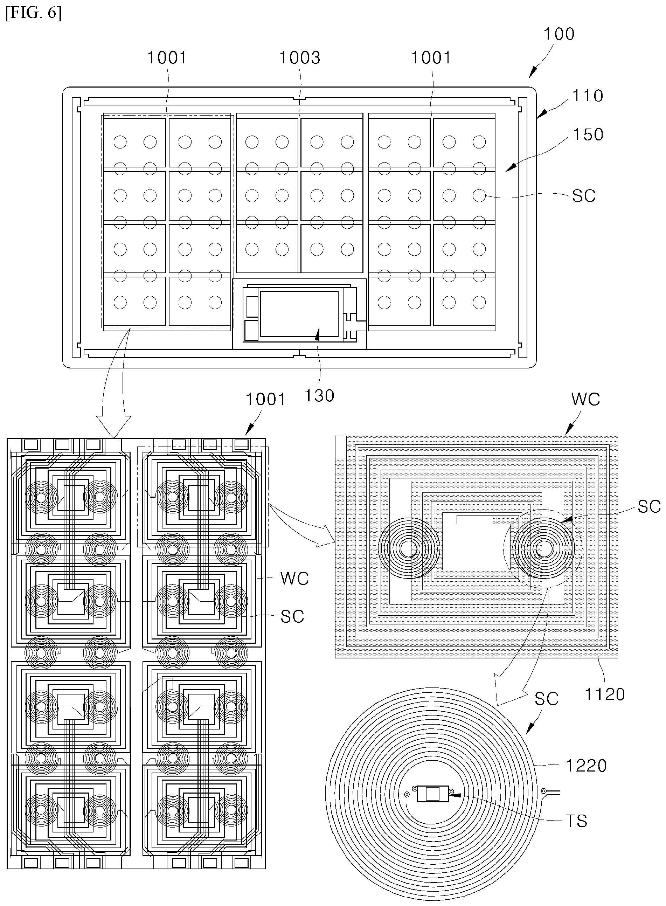

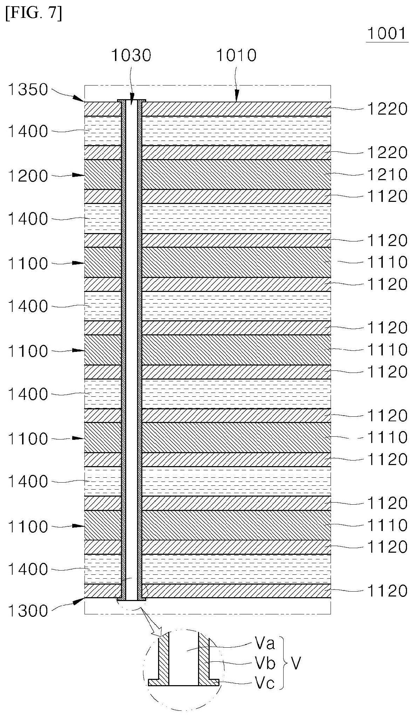

FIG. 6 is a view schematically showing the configuration of the coil assembly shown in FIG. 4, and FIG. 7 is a cross-sectional view schematically showing a stacked structure of a coil module shown in FIG. 6.

Referring to FIGS. 4 and 6, the coil assembly 1000 may include a plurality of working coils WC arranged in a horizontal direction. As an example, in the coil assembly 1000, a plurality of working coils WC may be arranged along the first direction, that is, the lateral direction, and a plurality of working coils WC may be arranged in the second direction, that is, the front and rear directions.

The coil assembly 1000 may include at least one coil module 1001, 1003. In the present embodiment, the coil assembly 1000 is illustrated as including a plurality of coil modules 1001, 1003.

As an example, the coil assembly 1000 may include a plurality of coil modules 1001, 1003 arranged in the horizontal direction. For example, the coil assembly 1000 may include a plurality of coil modules 1001, 1003 arranged in the first direction.

In each of the coil modules 1001, 1003, as illustrated in FIGS. 6 and 7, a plurality of working coils WC may be disposed in the horizontal direction. Each of the working coils WC may be provided in a form in which a spiral coil is formed as a pattern on a printed circuit board. That is, the working coil WC may be provided in the form of a pattern formed in the coil modules 1001, 1003.

Each of the coil modules 1001, 1003 may include a coil substrate-stacked body 1010. The coil substrate-stacked body 1010 may include a plurality of first coil substrate portions 1100 stacked in the up and down directions (or perpendicular direction).

Each of the first coil substrate portions 1100 may include a first coil portion 1120. As an example, the first coil portion 1120 may be formed as a result of a metal foil stacked on the surface of the first coil substrate portion 1100 being patterned into a spiral coil shape.

In an embodiment, a plurality of first coil substrate portions 1100 may be stacked in the up and down directions to form one coil module 1001, 1003, and thereby, a plurality of first coil portions 1120 may be stacked in the up and down directions. And the plurality of first coil portions 1120 stacked in the up and down directions may be connected to each other in the up and down directions to form each one of the working coils WC.

Additionally, each first coil substrate portion 1100 may have a plurality of first coil portions 1120 arranged in one direction (e.g., the horizontal direction), and accordingly, the coil module 1001, 1003 may include a plurality of working coils WC arranged in the horizontal direction.

Additionally, the coil assembly 1000 according to an embodiment may include a sensing coil SC for sensing the presence of a container, as shown in FIGS. 6 to 7. Each of the coil modules 1001, 1003 may include a plurality of sensing coils SC arranged in the horizontal direction. As an example, in the coil assembly 1000, a plurality of sensing coils SC may be arranged along the first direction, that is, the lateral direction, and a plurality of sensing coils SC may be arranged in the second direction, that is, the front and rear directions.

Each of the sensing coils SC may be provided in a form in which a spiral coil is formed as a pattern on a printed circuit board. That is, the sensing coil SC may be provided in the form of a pattern formed in the coil modules 1001, 1003.

In an embodiment, the coil substrate-stacked body 1010 may include at least one second coil substrate portion 1200. The second coil substrate portion 1200 may be stacked in the up and down directions together with the first coil substrate portion 1100. That is, at least one second coil substrate portion 1200 and a plurality of first coil substrate portions 1100 may be stacked in the up and down directions to form one coil module 1001, 1003. Accordingly, in each of the coil modules 1001, 1003, at least a portion of the working coil WC and the sensing coil SC may be arranged in the up and down directions.

Each of the second coil substrate portions 1200 may include a second coil portion 1220. As an example, the second coil portion 1220 may be formed as a result of a metal foil stacked on the surface of the second coil substrate portion 1200 being patterned into a spiral coil shape.

The insulating layer disposed between the coil substrate portions 1100 and 1200 may be formed by an adhesive material 1400. In an embodiment, a plurality of first coil substrate portions 1100 stacked in the up and down directions may be coupled to each other by the adhesive material 1400, and the first coil substrate portion 1100 and the second coil substrate portion 1200 may also be coupled to each other by the adhesive material 1400. Also, a plurality of second coil substrate portions 1200 stacked in the up and down directions may be coupled to each other by the adhesive material 1400.

Each sensing coil SC may be formed by one second coil portion 1220, or may be formed as a result of connecting a plurality of second coil portions 1220 stacked in the up and down directions to each other in the up and down directions.

Additionally, each first coil substrate portion 1200 may have a plurality of second coil portions 1220 arranged in the horizontal direction, and accordingly, the coil module 1001, 1003 may include a plurality of sensing coils SC arranged in the horizontal direction.

Additionally, the coil assembly 1000 according to an embodiment may further include a temperature sensor TS. The temperature sensor TS may be provided to measure the temperature of the container, and may be disposed in the second coil substrate portion 1200.

The temperature sensor TS may be disposed in the inner side of the sensing coil SC in the horizontal direction. For example, the temperature sensor TS may be installed in the second coil substrate portion 1200 to be disposed within an area surrounded by the sensing coil SC.

In The present disclosure, embodiments are described in which the coil assembly 1000 is used in a cooking appliance. However, in another embodiment, the coil assembly 1000 may be applied to other home appliances requiring induction heating. For example, the coil assembly 1000 may be mounted in a washing machine to be used to heat a water tank, drum, or laundry container in the inside of the washing machine, or to heat the washing water. As another example, the coil assembly 1000 may be mounted on a water purifier to be used to heat a hot water pipe or a water tank. As still another example, the coil assembly 1000 may be mounted on a clothes dryer or a clothes manager to be used to heat air for drying clothes. As yet another example, the coil assembly 1000 may be mounted on an electric pot or a rice cooker to be used to heat the liquid or food in the inside of the device.

### [Layout structure of coil modules]

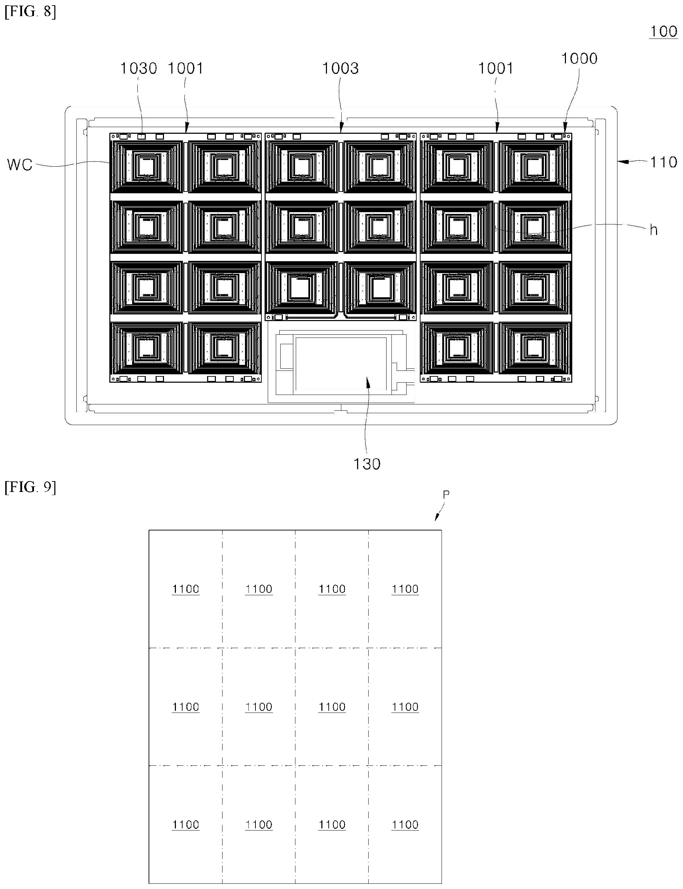

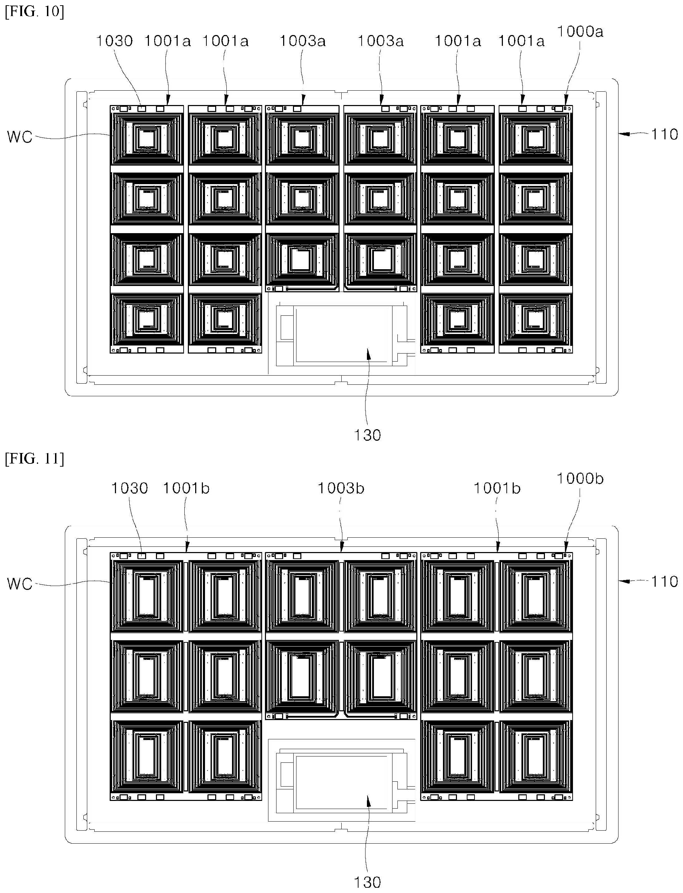

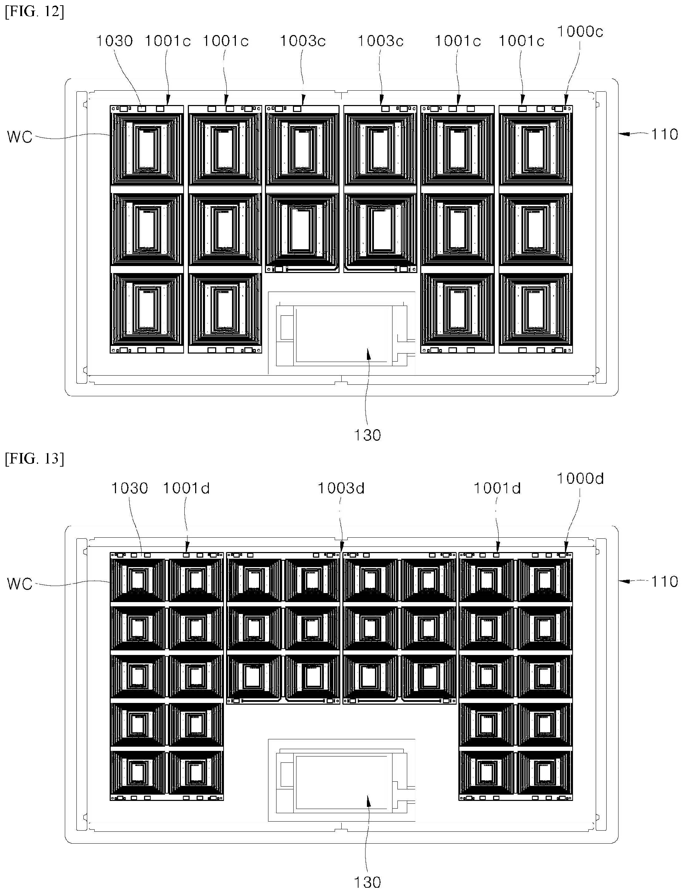

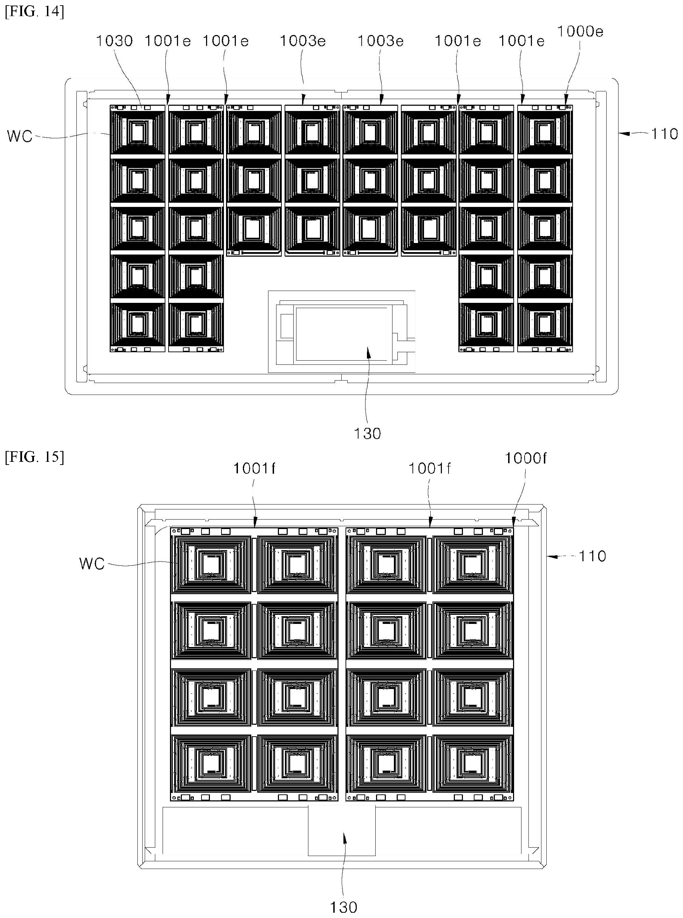

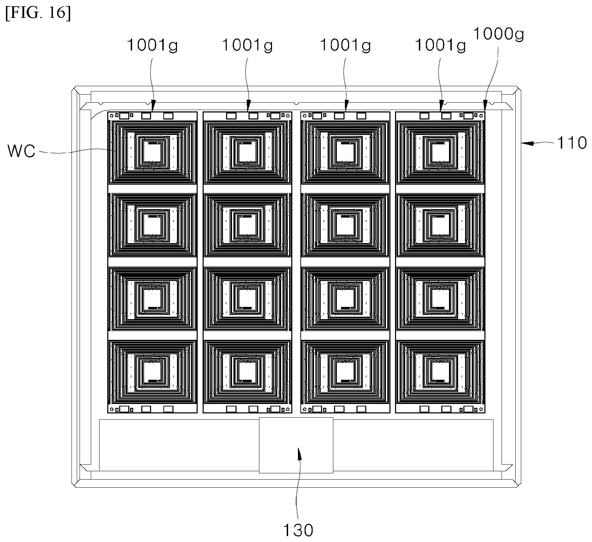

FIG. 8 is a plan view showing a first example of a layout structure of a first coil module and a second coil module, and FIG. 9 is a view schematically illustrating an example of the cutting state of an original substrate for forming a first coil substrate portion. Also, FIG. 10 is a plan view showing a second example of a layout structure of a first coil module and a second coil module; FIG. 11 is a plan view showing another example of a layout structure of a first coil module and a second coil module shown in FIG. 8; and FIG. 12 is a plan view showing another example of a layout structure of a first coil module and a second coil module shown in FIG. 10. Also, FIG. 13 is a plan view showing a third example of a layout structure of a first coil module and a second coil module, and FIG. 14 is a plan view showing a fourth example of a layout structure of a first coil module and a second coil module. Also, FIG. 15 is a plan view showing a fifth example of a layout structure of a first coil module and a second coil module, and FIG. 16 is a plan view illustrating a sixth example of a layout structure of a first coil module and a second coil module.

Referring to FIGS. 4 and 8, the coil assembly 1000 according to an embodiment may include a plurality of coil modules 1001, 1003. The plurality of coil modules 1001, 1003 may be arranged in the coil assembly 1000 along the first direction (e.g., horizontal direction).

As described above, the cooktop 100 according to an embodiment may include the control panel 130. The control panel 130 may be disposed in the top plate 120 at a position biased toward the front.

With respect to the first direction (e.g., horizontal direction), the control panel 130 may be disposed approximately at the center of the coil assembly 1000. With respect to the second direction (e.g., vertical direction), the control panel 130 may be disposed at a position biased toward the front side of the coil assembly 1000.

The coil assembly 1000 may be disposed in the lower side of the top plate 120, but may not be disposed in the lower side of an area of the top plate 120, which is occupied by the control panel 130. For example, the working coil WC may be disposed in the lower side of only an area of the top plate 120, which is not occupied by the control panel 130, and may not be disposed in the lower side of an area of the top plate 120, which is occupied by the control panel 130.

The coil assembly 1000 may include several types of coil modules 1001, 1003 having different sizes. In the present embodiment, the coil modules 1001, 1003 are illustrated as including a first coil module 1001 and a second coil module 1003. Each of the first coil module 1001 and the second coil module 1003 may include a plurality of working coils WC. In an embodiment, the second coil module 1003 may include working coils WC whose number is smaller than that of the first coil module 1001.

In an embodiment, the first coil module 1001 and the second coil module 1003 may be arranged along the first direction (e.g., horizontal direction) in the coil assembly 1000. Additionally, with respect to the second direction (e.g., vertical direction, the length of the second coil module 1003 may be set shorter than the length of the first coil module 1001. That is, the second coil module 1003 may be provided in a form that has a shorter second direction length and includes a smaller number of working coils WC than the first coil module 1001.

In the coil assembly 1000, a pair of first coil modules 1001 and at least one second coil module 1003 may be arranged along the first direction. In this case, the pair of first coil modules 1001 may be disposed to be spaced apart from each other along the first direction. And at least one second coil module 1003 may be disposed between the pair of first coil modules 1001.

For example, similarly to the control panel 130, at least one second coil module 1003 may be disposed in the first direction center of the coil assembly 1000. At least one second coil module 1003 and the control panel 130 may be disposed on the same straight line in the second direction.

With respect to the first direction, the control panel 130 may be disposed between the pair of first coil modules 1001. Additionally, with respect to the second direction, the control panel 130 may be disposed at a position more biased toward one side than the second coil module 1003, for example, at the front side of the second coil module 1003. Accordingly, at least a portion of the control panel 130 can be disposed in an area surrounded by the pair of first coil modules 1001 and the second coil module 1003.

That is, the control panel 130 may be disposed in a position where visual information provided through the control panel 130 can be easily seen by the user, and in a position where the user can easily operate the control panel 130. The control panel 130 occupies a predetermined area on the top surface of the cooktop 100.

Additionally, since the working coil WC cannot be disposed in the area where the control panel 130 occupies on the top surface of the cooktop 100, the working coil WC must be disposed in the remaining area except the area occupied by the control panel 130. Accordingly, the coil assembly 1000 with the working coils WC is disposed in an area where the control panel 130 does not occupy on the top surface of the cooktop 100. For example, the horizontal direction outer shape of the coil assembly 1000 may be formed in a shape of an upside-down version of a " 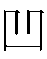 " shape.

The coil assembly 1000 may include coil modules 1001, 1003 provided with working coils WC, wherein the coil modules 1001, 1003 are of several kinds and have different second direction lengths. In the present embodiment, the coil assembly 1000 is illustraed as including two kinds of coil modules 1001, 1003, that is, the first coil module 1001 and the second coil module 1003.

As an example, the horizontal direction outer shape of the coil module 1001, 1003 (hereinafter, referred to as "outer shape of the coil module") may be formed in a rectangular shape. That is, the outer shapes of the first coil module 1001 and the second coil module 1003 may be formed in a rectangular shape, respectively.

For example, the shape of the second coil module 1003 may be formed in a rectangular shape having a second direction length different from that of the first coil module 1001. And the second coil module 1003 and the control panel 130 may be disposed on the same straight line in the second direction, and the second coil module 1003 may be disposed in the rear side of the control panel 130.

Considering that the second coil module 1003 and the control panel 130 are disposed on the same straight line in the second direction, the second direction length of the second coil module 1003 is set to be shorter than the second direction length of the first coil module 1001.

As described above, the coil assembly 1000 may be made of a combination of a plurality of coil modules 1001, 1003 arranged in the horizontal direction, and each of the coil modules 1001, 1003 may be formed in a rectangular shape. That is, the coil assembly 1000 may not be formed by a single coil module formed in a shape of an upside-down version of a " 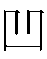 " shape, but by a combination of a plurality of coil modules 1001, 1003 formed in rectangular shapes.

In an embodiment, as shown in FIGS. 8 and 9, the first coil substrate portion 1100 forming each of the coil modules 1001, 1003 may be formed by a copper clad laminate (CCL). Each copper clad laminate forming each first coil substrate portion 1100 may be provided as a result of cutting the original substrate B of the copper clad laminate (hereinafter, referred to as "original substrate").

In a case where the first coil substrate portion 1100 is formed in the " 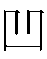 " shape or an inverted shape of the " 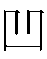 " shape, when the first coil substrate portion 1100 is manufactured by cutting the original substrate P, a loss of the original substrate P occurs as much as the amount cut out to secure a space for disposing the control panel 130. That is, in a case where the coil assembly 1000 is formed of one coil module 1001, 1003, there is a problem in that the loss of the original substrate P used to manufacture the first coil substrate portion 1100 increases.

On the other hand, in a case where the coil assembly 1000 is formed of a combination of a plurality of coil modules 1001, 1003, it is possible that each of the coil modules 1001, 1003 is formed in a rectangular shape. That is, the coil assembly 1000 can be formed in a " 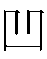 " shape or in a shape of an upside-down version of the " 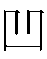 " shape by a combination of various kinds of coil modules 1001, 1003 having different sizes, for example, the first coil module 1001 and the second coil module 1003.

Accordingly, when manufacturing the first coil substrate portion 1100 by cutting the original substrate P, the original substrate P can be cut into a rectangular shape, and thereby, it is possible to reduce the loss occurring in the original substrate P used to manufacture the first coil substrate portion 1100.

In an embodiment, the working coil WC may be formed in a shape including a polygonal shape. For example, the horizontal direction outer shape of the working coil WC (hereinafter, referred to as "outer shape of the working coil") may be a polygonal shape.

As an example, the outer shape of the working coil WC may be approximately rectangular, and the horizontal direction outer shape of the cooktop 100 (hereinafter referred to as "outer shape of the cooktop") is also a shape close to an approximate rectangle. Therefore, it is preferable that the horizontal direction outer shape of the coil module 1001, 1003 (hereinafter, referred to as "outer shape of the coil module") is rectangular.

Since the outer shape of the coil module 1001, 1003 is formed in a rectangular shape similar to the outer shape of the working coil WC, it is possible to effectively increase the density of the area in the coil module 1001, 1003, which is occupied by the working coil WC. Additionally, since the outer shape of the coil module 1001, 1003 is formed in a rectangular shape similar to the outer shape of the cooktop 100, it is possible to effectively increase the density of the area in the cooktop 100, which is occupied by the coil module 1001, 1003.

In other words, since the outer shape of the coil module 1001, 1003 is formed in a polygonal shape similar to the outer shape of the working coil WC and the outer shape of the cooktop 100, it is possible to effectively increase the density of the area in the cooktop 100, which is occupied by the working coil WC, thereby effectively increasing the extent of the area in the cooktop 100, which can heat the container.

Accordingly, the extent of the area in the cooktop 100, in which the container is in contact with the working coil WC can be increased, so that the heating efficiency of the cooktop 100 can be effectively improved.

On the other hand, the difference in length between the first coil module 1001 and the second coil module 1003 in the second direction may be adjusted by the difference in the number of working coils WC in the second direction. For example, working coils WC of the same size and shape may be provided to both the first coil module 1001 and the second coil module 1003, and the number of working coils WC in the second direction in the second coil module 1003 may be set to be one or more less than the number of working coils WC in the second direction in the first coil module 1001.

In this way, by adjust the number of working coils WC by varying the lengths of the first coil module 1001 and the second coil module 1003, even if the size of the coil module 1001, 1003 is changed, there is no need to design the size and shape of the working coil WC differently accordingly. That is, various kinds of coil modules 1001, 1003 having different second direction lengths may all be provided in a form including one kind of a working coil WC.

Accordingly, not only can the cost and time required to design the working coil WC be reduced, but also various kinds of coil modules 1001, 1003 having different second direction lengths can be manufactured more easily and quickly at a lower cost.

In an embodiment, the control panel 130 and the second coil module 1003 may be disposed in the first direction center of the top surface of the cooktop 100, and first coil modules 1001 may be disposed in the both sides of the top surface of the cooktop 100 in the first direction.

As an example, the second direction length of the first coil module 1001 may be set to be approximately similar to the second direction length of the top surface of the cooktop 100. And the second direction length difference between the first coil module 1001 and the second coil module 1003 may be set to be greater than or equal to the second direction length of the working coil WC.

Accordingly, while most area of the top surface of the cooktop 100 can be filled with working coils WC, it is possible to secure an area necessary for disposing the control panel 130 on the top surface of the cooktop 100.

As an example, in the coil assembly 1000, a pair of first coil modules 1001 and one second coil module 1003 may be arranged along the first direction. In this case, the pair of first coil modules 1001 may be disposed to be spaced apart from each other along the first direction. And one second coil module 1003 may be disposed between the pair of first coil modules 1001.

For example, similarly to the control panel 130, one second coil module 1003 may be disposed in the first direction center of the coil assembly 1000. One second coil module 1003 and the control panel 130 may be disposed on the same straight line in the second direction.

In this regard, the number of working coils WC included in each first coil module 1001 and the number of working coils WC included in each second coil module 1003 may be eight and six, respectively (see FIG. 8), or six and four, respectively (see FIG. 11).

As another example, in the coil assembly 1000a as shown in FIG. 10, two pairs of first coil modules 1001a and a pair of second coil modules 1003a may be arranged along the first direction. In this case, a pair of first coil modules 1001a may be disposed on one side of the pair of second coil modules 1003a in the first direction, and the other pair of first coil modules 1001a may be disposed on the other side of the pair of second coil modules 1003a in the first direction.

In this regard, the number of working coils WC included in each first coil module 1001a and the number of working coils WC included in each second coil module 1003a may be four and three, respectively (see FIG. 10), or three and two, respectively (see FIG. 12).

As another example, in the coil assembly 1000d, as shown in FIG. 13, a pair of first coil modules 1001d and a pair of second coil modules 1003d may be disposed to be spaced apart along the first direction. And a pair of second coil modules 1003d may be disposed between the pair of first coil modules 1001d.

As another example, in the coil assembly 1000e as shown in FIG. 14, two pairs of first coil modules 1001e and two pairs of second coil modules 1003e may be arranged along the first direction. In this case, a pair of first coil modules 1001e may be disposed on one side of the two pairs of second coil modules 1003e in the first direction, and the other pair of first coil modules 1001e may be disposed on the other side of the two pairs of second coil modules 1003e in the first direction.

Additionally, as shown in FIG. 15, only a pair of first coil modules 1001f may be arranged along the first direction, or as shown in FIG. 16, only two pairs of first coil modules 1001g may be arranged along the first direction.

### [Structure of working coil]

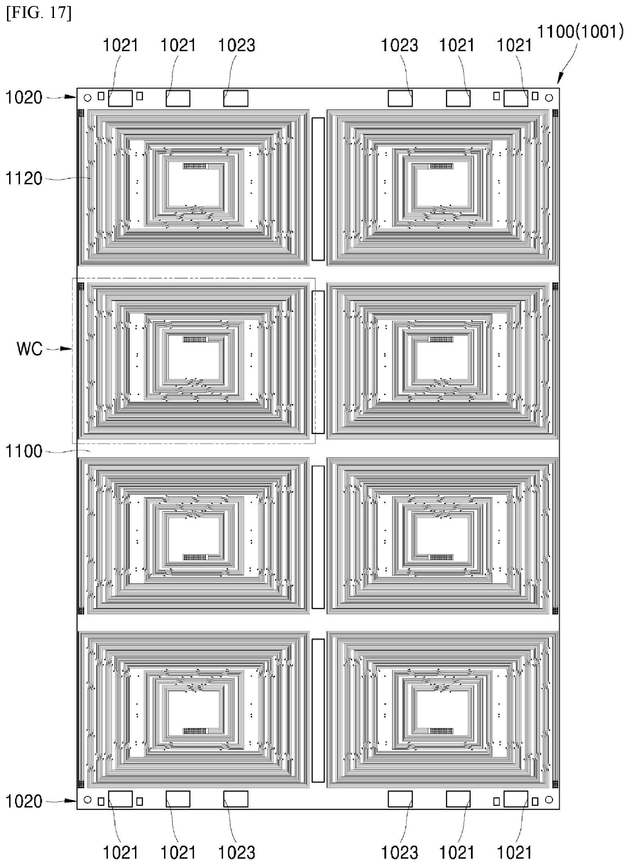

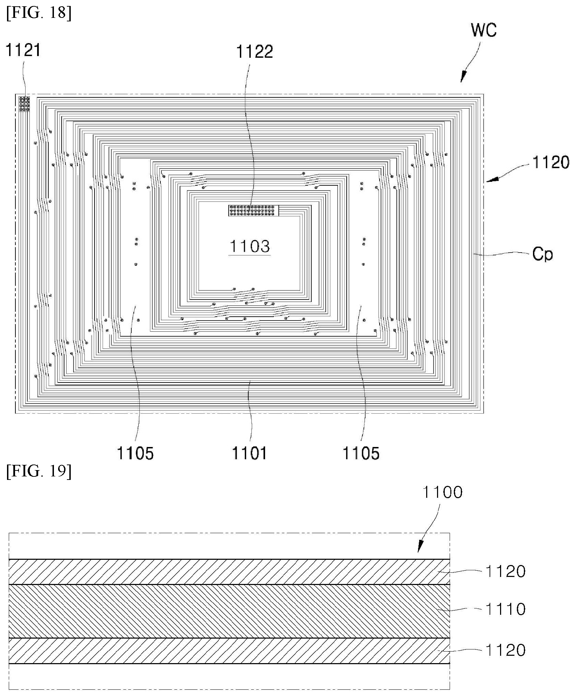

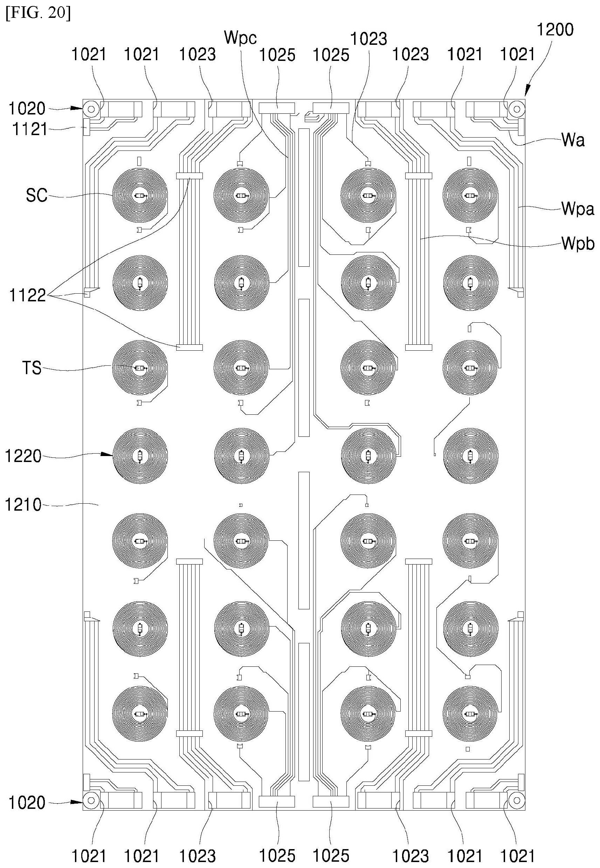

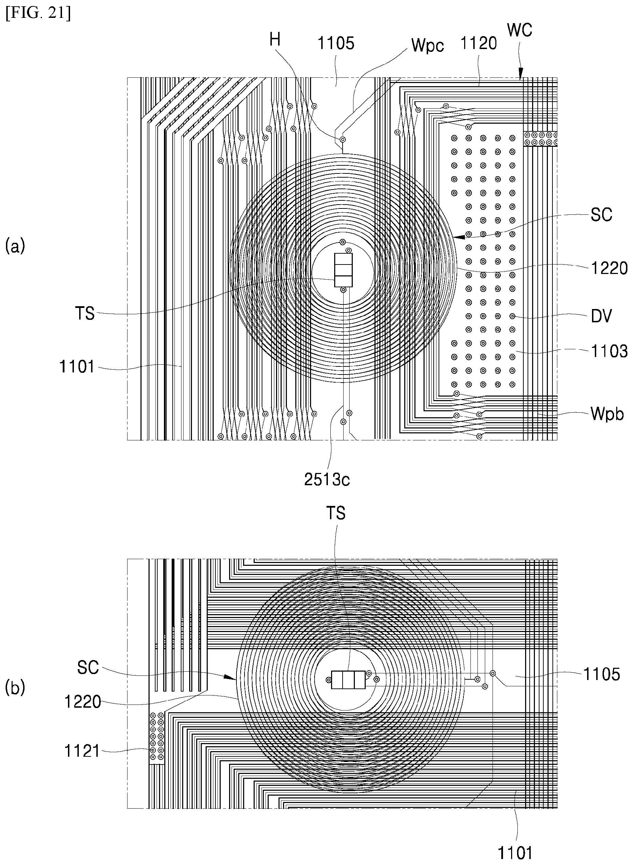

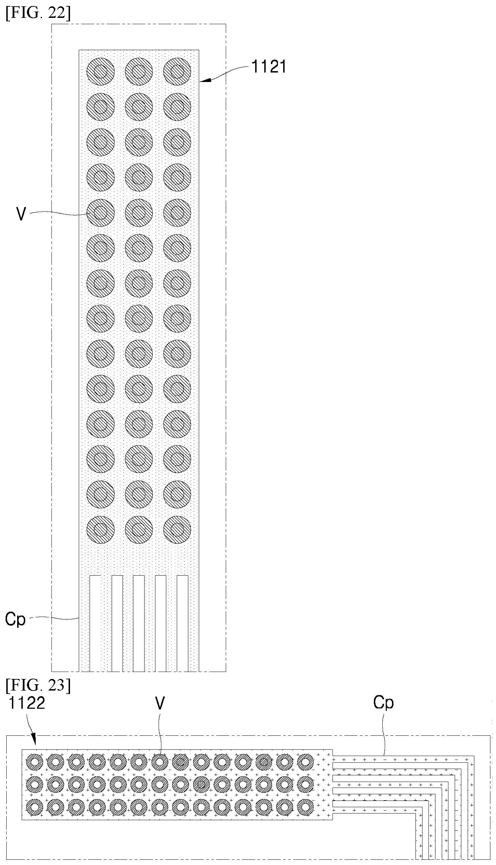

FIG. 17 is a plan view showing an example of a first coil substrate portion according to an embodiment; FIG. 18 is an enlarged view illustrating a portion of the first coil substrate portion shown in FIG. 17; and FIG. 19 is a cross-sectional view schematically showing a stacked structure of a first coil portion shown in FIG. 18. Also, FIG. 20 is a plan view showing an example of the layout structure of a sensing coil, and FIG. 21 is an enlarged view of part "21" in FIG. 20, which shows an example of a layout structure of a sensing coil with respect to a working coil. Also, FIG. 22 is an enlarged view of a first terminal shown in FIG. 18, and FIG. 23 is an enlarged view of a second terminal shown in FIG. 18.

The working coil WC shown in FIGS. 8, 17 to 19 may be formed of conductors, more specifically, electrical conductors, stacked in a plurality of layers. Hereinafter, the first coil portion 1120, more specifically, a coil pattern Cp to be described later, is illustrated as being formed of a conductor.

The working coil WC may be formed as a result of connecting, in the up and down directions, the first coil portions 1120 to each other, which are respectively provided to the plurality of first coil substrate portions 1100 stacked in the up and down directions. Each of the first coil substrate portions 1100 may include a core 1110 and a first coil portion 1120.

The core 1110 may form a frame of the first coil substrate portion 1100, and may be formed of insulating material. As an example, the core 1110 may be formed of prepreg material. Hereinafter, the core 1110 is illustrated as being formed of a thermoset prepreg, and more specifically, a prepreg that is FR4.

The first coil portions 1120 may be disposed in both sides of the core 1110 in the up and down directions, respectively. For example, each first coil substrate portion 1100 may be provided in a form in which the first coil portions 1120 are formed on both sides of the core 1110 in the up and down directions, respectively, as a layer.

As an example, the first coil portions 1120 may be provided in a form patterned on both sides of the core 1110 in the up and down directions. For example, the first coil substrate portion 1100 may be formed by a copper clad laminate including a core 1110 and copper foils stacked on both sides of the core 1110 in the up and down directions. In this case, the first coil portion 1120 may be formed as a result of patterning the foil stacked on the core 1110 into a coil shape.

In an embodiment, the working coil WC may be formed in a shape including a polygonal shape. For example, the horizontal direction outer shape of the working coil WC (hereinafter, referred to as "outer shape of the working coil") may be a polygonal shape.

Additionally, as described above, the working coil WC may be formed by a plurality of first coil substrate portions 1100 stacked in the up and down directions. The first coil substrate portion 1100 may include a pattern region 1101 and a non-patterned region 1103, 1105.

The pattern region 1101 corresponds to a region of the first coil substrate portion 1100, in which the first coil portion 1120 is disposed. And the non-patterned region 1103, 1105 corresponds to a region of the first coil substrate portion 1100, in which the first coil portion 1120 is not disposed. The pattern region 1101 and the non-patterned region 1103, 1105 may be disposed on the same plane, and may be arranged in the horizontal direction.

The non-patterned region 1103, 1105 may include a first non-patterned region 1103. In each of the working coils WC, the first non-patterned region 1103 may be disposed in the horizontal direction center. Additionally, the first non-patterned region 1103 may be disposed in the horizontal direction center of the first coil substrate portion 1100.

For example, the first non-patterned region 1103 may be disposed at the horizontal direction center of each of the working coil WC and the first coil substrate portion 1100. The pattern region 1101 may be disposed to surround the first non-patterned region 1103 in the outside in the horizontal direction.

In the present embodiment, the expression "center" does not mean the exact center, but means an area surrounded by a spirally wound working coil WC and including the center of the working coil WC in the diameter direction and its surroundings.

At least a portion of the first coil portion 1120 may surround the non-patterned region 1103, 1105 in the outside in the horizontal direction. As an example, at least a portion of the first coil portion 1120 may surround the first non-patterned region 1103 in the outside in the horizontal direction.

The first coil portion 1120 may include at least one coil pattern Cp disposed in the outer side of the first non-patterned region 1103 in the horizontal direction. In each of the first coil portions 1120, each coil pattern Cp may be wound multiple times around the first non-patterned region 1103. The first coil portion 1120 may be formed by at least one coil pattern Cp provided in this form.

Each of the first coil portions 1120 may include a plurality of coil patterns Cp. In this regard, in each of the first coil portions 1120, a plurality of coil patterns Cp may be disposed to be spaced apart from each other by a predetermined interval along the diameter direction of the working coil WC.

For example, each of the first coil portions 1120 may include three to six coil patterns Cp, respectively. However, the present disclosure is not limited to this, and each of the coil portions 112 may include a number of coil patterns Cp exceeding six, respectively.

In the present embodiment, each of the first coil portions 1120 is illustrated as including three to six coil patterns Cp, respectively. According to this, in each of the first coil portions 1120, three to six coil patterns Cp may be arranged along the diameter direction of the working coil WC. The coil pattern Cp disposed in each of the first coil portions 1120 may be connected in the up and down directions to any one of the coil patterns Cp disposed in the other first coil portions 1120 adjacent in the up and down directions.

Additionally, the first coil substrate portion 1100 may further include a second non-patterned region 1105. Like the first non-patterned region 1103, the second non-patterned region 1105 corresponds to a region in which the first coil portion 1120 is not formed.

With respect to the horizontal direction, the second non-patterned region 1105 may be disposed in the outer side of the first non-patterned region 1103. In the present embodiment, the second non-patterned region 1105 is illustrated as being disposed in the first direction outer side of the first non-patterned region 1103.

Additionally, in each of the first coil substrate portions 1100, the first non-patterned region 1103 and the second non-patterned region 1105 are not connected in the horizontal direction. With respect to the horizontal direction, at least a portion of the sensing coil SC may be disposed between the first non-patterned region 1103 and the second non-patterned region 1105. That is, between the first non-patterned region 1103 and the second non-patterned region 1105, at least a portion of the first coil portion 1120 may be disposed.

In an embodiment, a plurality of second non-patterned regions 1105 may be arranged in the first direction for each working coil WC. As an example, a pair of second non-patterned regions 1105 may be disposed for each working coil WC. The pair of second non-patterned regions 1105 may be disposed in the first direction outer side of the first non-patterned region 1103. That is, with respect to the first direction, the first non-patterned region 1103 may be disposed between the pair of second non-patterned regions 1105.

Additionally, in an embodiment, a plurality of working coils WC may be arranged along the first direction. The plurality of second non-patterned regions 1105 provided to the plurality of working coils WC disposed in this way may be disposed at equal intervals along the first direction.

Meanwhile, as shown in FIGS. 6 to 7, the second coil substrate portion 1200 may be disposed in the upper side or lower side of the first coil substrate portion 1100. The sensing coil SC may be formed by the second coil substrate portion 1200. The sensing coil SC may be disposed in the upper side or lower side of the first coil substrate portion 1100. The sensing coil SC may be disposed in a region overlapping the first coil substrate portion 1100 in the up and down directions.

As shown in FIGS. 6, 7, 20, and 21, in each of the coil modules 1001, 1003, the sensing coil SC may be disposed in the outer side of the working coil WC in the vertical direction. For example, in each of the coil modules 1001, 1003, the sensing coil SC and the working coil WC may be arranged in the up and down directions.

With respect to the horizontal direction, at least a portion of the sensing coil SC may be disposed in the second non-patterned region 1105. Accordingly, as a plurality of second non-pattern regions 1105 are disposed at equal intervals along the first direction, a plurality of sensing coils SC can be disposed at equal intervals along the first direction.

As described above, as a plurality of second non-pattern regions 1105 are disposed at equal intervals along the first direction, a plurality of sensing coils SC can be disposed at equal intervals along the first direction. In an embodiment, at least a portion of each sensing coil SC may be disposed in the second non-patterned region 1105. Accordingly, when a plurality of second non-pattern regions 1105 are disposed at equal intervals along the first direction, a plurality of sensing coils SC can be disposed at equal intervals along the first direction.

In an embodiment, the temperature sensor TS may be disposed in the horizontal direction inner side of the sensing coil SC. With respect to the horizontal direction, at least a portion of the temperature sensor TS may be disposed in the second non-patterned region 1105.

As an example, the temperature sensor TS may be disposed in the second non-patterned region 1105. That is, the temperature sensor TS installed on the second coil substrate portion 1200 and the second non-patterned region 1105 formed on the first coil substrate portion 1100 may be disposed to overlap each other in the up and down directions.

To this end, each sensing coil SC may be disposed at a position where the entire temperature sensor TS can be disposed in the second non-patterned area 1105, that is, a position where the entire temperature sensor TS can overlap the second non-patterned area 1105 in the up and down directions.

As shown in FIGS. 17, 18, 22, and 23, each first coil portion 1120 may include a fourth terminal 1121 and a fifth terminal 1122, respectively. The fourth terminal 1121 and the fifth terminal 1122 may connect a plurality of coil patterns Cp arranged in the horizontal direction, that is, a plurality of coil patterns Cp forming one first coil portion 1120.

With respect to the horizontal direction, the fourth terminal 1121 may be disposed in the outer side of the first non-patterned area 1103 and the fifth terminal 1122, and at least a portion of the fifth terminal 1122 may be disposed to be in contact with the first non-patterned area 1103. According to this, with respect to the horizontal direction, the second non-patterned region 1105 may be disposed between the fourth terminal 1121 and the fifth terminal 1122.

Additionally, based on the second non-patterned area 1105, the fourth terminal 1121 may be disposed in the horizontal direction outer side area of the first coil portion 1120, and the fifth terminal 1122 may be disposed in the horizontal direction inner side area of the first coil portion 1120.

As an example, the fourth terminal 1121 may be disposed in the horizontal direction outermost side of the first coil portion 1120, and the fifth terminal 1122 may be disposed in the horizontal direction innermost side of the first coil portion 1120. For example, the fourth terminal 1121 may be connected with the horizontal direction outermost end of the coil pattern Cp. And the fifth terminal 1122 may be connected with the innermost end of the coil pattern Cp.

Referring to FIGS. 6 and 20, the coil assembly 1000 according to an embodiment may further include a terminal part 1020.

The terminal part 1020 may be provided for connection between a power supply unit supplying power and the working coil WC.

With respect to the horizontal direction, the terminal part 1020 may be disposed in the outer side of an assembly of a plurality of working coils WC. The terminal part 1020 may be connected with at least one of the fourth terminal 1121 and the fifth terminal 1122.

The terminal part 1020 may include a first terminal 1021. The first terminal 1021 may be connected with the fourth terminal 1121. The first terminal 1021 may be connected with the working coil WC through the fourth terminal 1121.

The terminal part 1020 may include a second terminal 1023. The second terminal 1023 may be connected with the fifth terminal 1122. The second terminal 1023 may be connected with the working coil WC through the fifth terminal 1122.

The fourth terminal 1121 and the fifth terminal 1122 may be disposed in the first coil substrate portion 1100 and the first outer layer part 1300, respectively. That is, the fourth terminal 1121 and the fifth terminal 1122 may be formed in the same layer as the layer in which the first coil portion 1120 is formed.

In an embodiment, in each of the coil modules 1001, 1003, a plurality of working coils WC may be disposed in a matrix form. That is, a plurality of working coils WC may be arranged in the first direction, and a plurality of working coils WC may be arranged in the second direction.

As an example, each of the terminal parts 1020 may include a plurality of first terminals 1021 disposed in the first direction. Additionally, in each of the coil modules 1001, 1003, a plurality of working coils WC adjacent to each other in the second direction may be connected to each other so as to operate simultaneously. Therefore, each first terminal 1021 may be connected with one working coil WC. And the second terminal 1023 may be connected with a plurality of working coils WC adjacent to each other in the second direction.

For example, in a case where a plurality of working coils WC are arranged in 2 columns by 4 rows in each of the coil modules 1001, 1003, a pair of terminal parts 1020 may be provided to each of the coil modules 1001, 1003. The pair of terminal parts 1020 may be disposed to be spaced apart from each other in the first direction with an assembly of a plurality of working coils WC interposed therebetween. That is, any one of the pair of terminal parts 1020 may be disposed in the front side of the assembly of the plurality of working coils WC, and the other of the pair of terminal parts 1020 may be disposed in the rear side of the assembly of the plurality of working coils WC.

In each of the coil modules 1001, 1003, a plurality of working coils WC may be halved in the form of 2 columns by two rows, and each terminal part 1020 may be connected with the working coils WC in the form of 2 columns by 2 rows, respectively. For example, one of the pair of terminal parts 1020 disposed in the front side may be connected with four working coils WC disposed in the front side on the coil module 1001, 1003, and one of the pair of terminal parts 1020 disposed in the rear side may be connected with four working coils WC disposed in the rear side on the coil module 1001, 1003.

As described above, the fourth terminal 1121 may be connected with the horizontal direction outermost end of the working coil WC, and the fifth terminal 1122 may be connected with the innermost end of the working coil WC. As an example, each of the fourth terminals 1121 may be disposed at a position biased toward the terminal part 1020 with which it is to be connected.

That is, with respect to the second direction, each of the fourth terminals 1121 may be disposed closer to the end of the working coil WC than the center thereof, and at a position biased toward the terminal part 1020 with which it is to be connected. For example, the fourth terminals 1121 provided to the four working coils WC adjacent to the one of the pair of terminal parts 1020, which is disposed in the front side, may be disposed at positions biased to the front side on the working coils WC.

In an embodiment, each of the terminal parts 1020 may include a pair of first terminals 1021 arranged in the first direction. Each of the first terminals 1021 may be connected with only one working coil WC, respectively, by being connected with one fourth terminal 1121. Each first terminal 1021 may electrically connect each working coil WC with a power supply unit, for example, a driving circuit 300 and a load circuit 350.

The second terminal 1023 may connect the working coil WC with the ground terminal. The second terminal 1023 may be connected with a pair of fifth terminals 1122 adjacent to each other in the second direction. That is, the second terminal 1023 may connect a pair of working coils WC adjacent to each other in the second direction with the ground terminal.

As an example, the terminal part 1020 may be provided to each of the first coil substrate portion 1100, the second coil substrate portion 1200, and the outer layer parts 1300, 1350 which are stacked in the up and down directions. For example, the first terminal 1021 provided to each of the first coil substrate portion 1100, the second coil substrate portion 1200, the first outer layer part 1300, and the second outer layer part 1350 may be stacked in the up and down directions. The first terminals 1021 may be electrically connected to each other through a via.

The second terminal 1023 provided to each of the first coil substrate portion 1100, the second coil substrate portion 1200, the first outer layer part 1300, and the second outer layer part 1350 may be stacked in the up and down directions. The second terminals 1023 may be electrically connected to each other through a via.

As another example, the terminal part 1020 may be provided only to the second outer layer part 1350. That is, the terminal part 1020 may be disposed only on the upper end of the coil module 1001, 1003.

Each of the coil modules 1001, 1003 may include a plurality of sensing coils SC, and the plurality of sensing coils SC may be disposed to be spaced apart from each other by a predetermined interval along the first direction. Additionally, similarly to the first coil substrate portion 1100, the second outer layer part 1350 and the second coil substrate portion 1200 may include a fourth terminal 1121 and a fifth terminal 1122, respectively. That is, the fourth terminal 1121 and the fifth terminal 1122 may be formed in the same layer as the layer in which the second coil portion 1220 is formed.

Each terminal part 1020 may further include a third terminal 1025. The third terminal 1025 may connect the sensing coil SC with the power supply unit. The third terminal 1025 may be provided to the second outer layer part 1350, and may also be provided to the second coil substrate portion 1200. The third terminal 1025 may be formed in the same layer as the sensing coil SC (e.g., the layer in which the second coil portion 1220 is formed).

### [Layout structure of working coils for each coil module]

As shown in FIG. 8, in each of the coil modules 1001, 1003, a plurality of working coils WC may be arranged in the first direction. For example, in each of the coil modules 1001, 1003, a plurality of working coils WC may be arranged along the first direction, and may also be arranged in the second direction. That is, in each of the coil modules 1001, 1003, a plurality of working coils WC may be disposed in a matrix form.

In this case, each working coil WC may be disposed to be spaced apart from another working coil WC adjacent thereto in the first direction by a predetermined interval in the first direction, and may be disposed to be spaced apart from another working coil WC adjacent thereto in the second direction by a predetermined interval in the second direction.

In an embodiment, the length of the coil module 1001, 1003 in the first direction may be set to be shorter than the length of the coil module 1001, 1003 in the second direction. That is, each of the coil modules 1001, 1003 may be formed in a rectangular shape, wherein the rectangular shape may have the second direction length longer than the first direction length.

In contrast to this, the length of the working coil WC in the second direction may be set to be shorter than the length of the working coil WC in the first direction. That is, each of the working coils WC may be formed in a rectangular shape, wherein the rectangular shape may have the first direction length longer than the second direction length.

In each of the coil modules 1001, 1003, the number of working coils WC disposed on the same straight line in the second direction may be greater than the number of working coils WC disposed on the same straight line in the first direction.

In an embodiment, the first coil module 1001 may include a plurality of working coils WC arranged in A columns by B rows, and the second coil module 1003 may include a plurality of working coils WC arranged in A columns by C rows. In this embodiment, the column is defined as a line along the first direction, and the row is defined as a line along the second direction.

As an example, the relationship among A, B, and C may be defined as follows:
A≥1, C≥2, B>C,

For example, in the first coil module 1001 and the second coil module 1003, one or more working coils WC may be arranged in the first direction and two or more working coils WC may be arranged in the second direction. Additionally, in the first coil module 1001, one or more working coils WC may be arranged in the first direction, and three or more working coils WC may be arranged in the second direction.

According to this, the number of working coils WC disposed on the same straight line in the first direction in the first coil module 1001 and the number of working coils WC disposed on the same straight line in the first direction in the second coil module 1003 may be set to be equal to each other. Additionally, the number of working coils WC disposed on the same straight line in the second direction in the second coil module 1003 may be set to be less than the number of working coils WC disposed on the same straight line in the second direction in the first coil module 1001.

As an example, when n first coil modules 1001 are disposed to be spaced apart along the first direction, n/2 second coil modules 1003 may be disposed between a pair of first coil modules 1001 disposed in the first direction innermost side.

In this case, each of the first coil modules 1001 may include 16/n working coils WC arranged in the form of 4/n columns by 4 rows. And each of the second coil modules 1003 may include 12/n working coils WC arranged in the form of 4/n columns by 3 rows.

For example, when two first coil modules 1001 are disposed to be spaced apart along the first direction, one second coil module 1003 may be disposed between a pair of first coil modules 1001 disposed in the first direction innermost side. In this case, each of the first coil modules 1001 may include eight working coils WC arranged in the form of 2 columns by 4 rows.

And each of the second coil modules 1003 may include six working coils WC arranged in the form of 2 columns by 3 rows. In this case, the coil assembly 1000 may include a total of twenty two working coils WC.

As described above, the cooktop 100 (see FIG. 3) may be provided with a plurality of indicator lamps L (see FIG. 3), and the indicator lamp L may be implemented by the lighting module 180 (see FIG. 4). The lighting module 180 may be disposed in the lower side of the coil assembly 1000, and the light emitted from the lighting module 180 may pass through the coil assembly 1000 to illuminate the light display area of the top plate 120.

In order to allow the light emitted from the lighting module 180 to be transmitted to the light display area of the top plate 120, each of the coil modules 1001, 1003 may be provided with a through hole h. In each of the coil modules 1001, 1003, the through hole h may penetrate the coil module 1001, 1003 in the up and down directions, and each through hole h may be disposed between one column of working coils WC and one column of working coils WC.

As illustrated in FIG. 10, if four first coil modules 1001a are disposed to be spaced apart to each other along the first direction, two second coil modules 1003a may be disposed between a pair of first coil modules 1001a disposed in the first direction innermost side. In this case, each of the first coil modules 1001 may include four working coils WC arranged in the form of 1 column by 4 rows.

In a case where the coil assembly 1000a is provided in the above-described form, a space may be formed between columns in the coil assembly 1000a. This space may be used as a passage for allowing the light emitted from the lighting module 180 to be transmitted to the light display area of the top plate 120.

That is, by providing each of the coil modules 1001a and 1003a in a form including only one column of working coils WC, the need for a separate through hole to be formed in the coil assembly 1000a becomes unnecessary.

Additionally, considering that its own size, or size of a display or a control panel may vary for each model, the coil assembly 1000a provided in the above-described form may be more advantageous for mass production than the coil assembly in the form illustrated in FIG. 8.

For example, according to the coil assembly 1000a provided in the above-described form, when producing several products with different sizes of the display or control panel, the first coil module 1001a can be used in common while only the size of the second coil module 1003a is changed depending on the size of the display or control panel.

Additionally, according to the coil assembly 1000a provided in the form described above, when necessary, it is enough only to repair or replace one column for each coil module 1001a, 1003a, so maintenance becomes easier and maintenance costs are reduced.

Additionally, if each coil module 1001a, 1003a is provided in the form including only one column of working coils WC as described above, the surface area of each coil module 1001a, 1003a can be relatively widened compared to the form in which each coil module includes two columns of working coils WC, and air can flow in each space between the coil modules 1001a, 1003a, thereby improving the heat dissipation performance of the coil assembly 1000a.

In comparison, in a case where two or more columns of working coils WC are disposed in each coil module 1001, 1003 as shown in FIG. 8, the number of coil modules 1001, 1003 to be assembled is reduced compared to when only one column of working coils WC is disposed in each coil module, so there is an advantage of reducing the assembly hour.

Additionally, in a case where two or more columns of working coils WC are disposed in each of the coil modules 1001, 1003, the space required to form wiring between the working coils WC of the two adjacent columns can be easily secured in the coil module 1001, 1003, so there is an advantage in that the wiring design can be performed easily and efficiently.

And each of the second coil modules 1003 may include three working coils WC arranged in the form of 1 column by 3 rows. Also in this case, the coil assembly 1000a may include a total of twenty two working coils WC.

As a second example, as shown in FIG. 11, each of the first coil modules 1001b may include 12/n working coils WC arranged in the form of 4/n columns by 3 rows. And each of the second coil modules 1003b may include 8/n working coils WC arranged in the form of 4/n columns by 2 rows.

For example, when two first coil modules 1001b are disposed to be spaced apart along the first direction, one second coil module 1003b may be disposed between a pair of first coil modules 1001b disposed in the first direction innermost side. In this case, each of the first coil modules 1001b may include six working coils WC arranged in the form of 2 columns by 3 rows.

And each of the second coil modules 1003b may include four working coils WC arranged in the form of 2 columns by 2 rows. In this case, the coil assembly 1000b may include a total of sixteen working coils WC.

As illustrated in FIG. 12, if four first coil modules 1001c are disposed to be spaced apart to each other along the first direction, two second coil modules 1003c may be disposed between a pair of first coil modules 1001c disposed in the first direction innermost side.

In this case, each of the first coil modules 1001c may include three working coils WC arranged in the form of 1 column by 3 rows. And each of the second coil modules 1003c may include two working coils WC arranged in the form of 1 column by 2 rows. Also in this case, the coil assembly 1000c may include a total of sixteen working coils WC.

As a third example, as shown in FIG. 13, when two first coil modules 1001d are disposed to be spaced apart to each other along the first direction, two second coil modules 1003d may be disposed between a pair of first coil modules 1001d disposed in the first direction innermost side. In this case, each of the first coil modules 1001d may include ten working coils WC arranged in the form of 2 columns by 5 rows.

And each of the second coil modules 1003d may include six working coils WC arranged in the form of 2 columns by 3 rows. In this case, the coil assembly 1000d may include a total of thirty two working coils WC.

As a fourth example, as shown in FIG. 14, if four first coil modules 1001e are disposed to be spaced apart to each other along the first direction, four second coil modules 1003e may be disposed between a pair of first coil modules 1001e disposed in the first direction innermost side. In this case, each of the first coil modules 1001e may include five working coils WC arranged in the form of 1 column by 5 rows.

And each of the second coil modules 1003e may include three working coils WC arranged in the form of 1 column by 3 rows. Also in this case, the coil assembly 1000e may include a total of thirty two working coils WC.

As a fifth example, as shown in FIG. 15, when n first coil modules 1001f are disposed to be spaced apart from each other along the first direction, each first coil module 1001f may include 16/n working coils WC arranged in the form of 4/n columns by 4 rows.

For example, when two first coil modules 1001f are disposed to be spaced apart from each other along the first direction, each first coil module 1001f may include eight working coils WC arranged in the form of 2 columns by 4 rows. In this case, the coil assembly 1000f may include a total of sixteen working coils WC.

As illustrated in FIG. 16, if four first coil modules 1001g are disposed to be spaced apart from each other along the first direction, each first coil module 1001g may include four working coils WC arranged in the form of 1 column by 4 rows. Also in this case, the coil assembly 1000g may include a total of sixteen working coils WC.

In the above-described examples, the coil assembly may include working coils WC which all have the same size and shape. Alternatively, the coil assembly may include several kinds of working coils WC having different sizes and shapes.

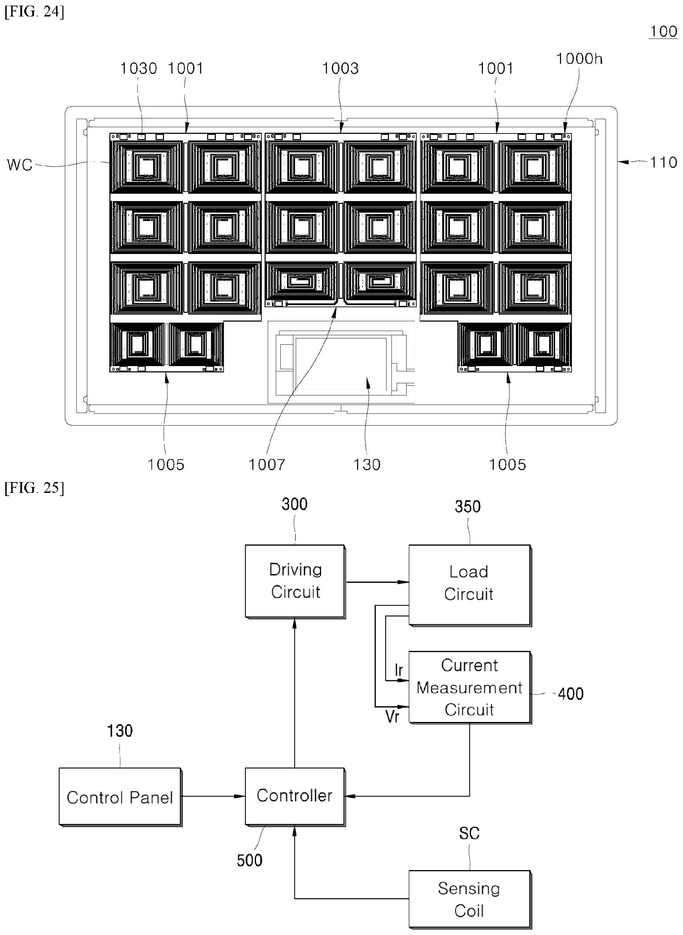

FIG. 24 is a plan view showing a seventh example of a layout structure of a first coil module and a second coil module.

As another example, the coil assembly 1000h as shown in FIG. 24 may further include at least one of the third coil module 1005 and the fourth coil module 1007. The first coil module 1001 and the third coil module 1005 may be disposed on the same straight line in the second direction, and the second coil module 1003 and the fourth coil module 1007 may be disposed on the same straight line in the second direction.

According to this, with respect to the first direction, a pair of first coil modules 1001 may be disposed to be spaced apart to each other along the first direction with the second coil module 1003 and the fourth coil module 1007 interposed therebetween.

Additionally, with respect to the second direction, the first coil module 1001 may protrude further to one side than the second coil module 1003; the third coil module 1005 may be disposed at a position more biased toward one side than the first coil module 1001; and the fourth coil module 1007 may be disposed at a position more biased toward one side than the second coil module 1003.

That is, the first coil module 1001 having the second direction length greater than that of the second coil module 1003 may protrude further to the front than the second coil module 1003; the third coil module 1005 may be disposed at a position more biased toward the front than the first coil module 1001; and the fourth coil module 1007 may be disposed at a position more biased toward the front than the second coil module 1003. Of course, the third coil module 1005 may be disposed at a position more biased toward the front than the fourth coil module 1007.

The third coil module 1005 and the fourth coil module 1007 may be formed to have horizontal direction sizes smaller than those of the first coil module 1001 and the second coil module 1003. To this end, the third coil module 1005 may include a working coil having the horizontal direction size smaller than that of the working coil provided to the first coil module 1001.

As described above, the control panel 130 may be disposed at a position more biased toward the front than the second coil module 1003, and a pair of first coil modules 1001 may be disposed to be spaced apart from each other along the first direction with the control panel 130 interposed therebetween. Additionally, a pair of third coil modules 1005 disposed in the front side of the pair of first coil modules 1001 may also be disposed to be spaced apart to each other along the first direction with the control panel 130 interposed therebetween.

With respect to the first direction, the length of the third coil module 1005 may be set to be shorter than the length of the first coil module 1001. And with respect to the second direction, the length of the third coil module 1005 may be set to be shorter than the length of the first coil module 1001. That is, the third coil module 1005 may be formed to have the first direction length and the second direction length which are shorter than those of the first coil module 1001.

Additionally, the fourth coil module 1007 may be disposed in the rear side of the control panel 130. With respect to the second direction, the fourth coil module 1007 may be disposed between the control panel 130 and the second coil module 1003, and the length of the fourth coil module 1007 may be formed to be shorter than the length of the second coil module 1003.

As the third coil module 1005 and the fourth coil module 1007 are disposed in the above-described form, it is possible to secure a wider area for the area in which the control panel 130 is to be disposed. According to this, the control panel 130 can be further spaced apart from the coil modules 1001, 1003 in the horizontal direction, and thereby, the control panel 130 can be less affected by the heat generated around the working coil WC.

### [Power supply-related configuration]

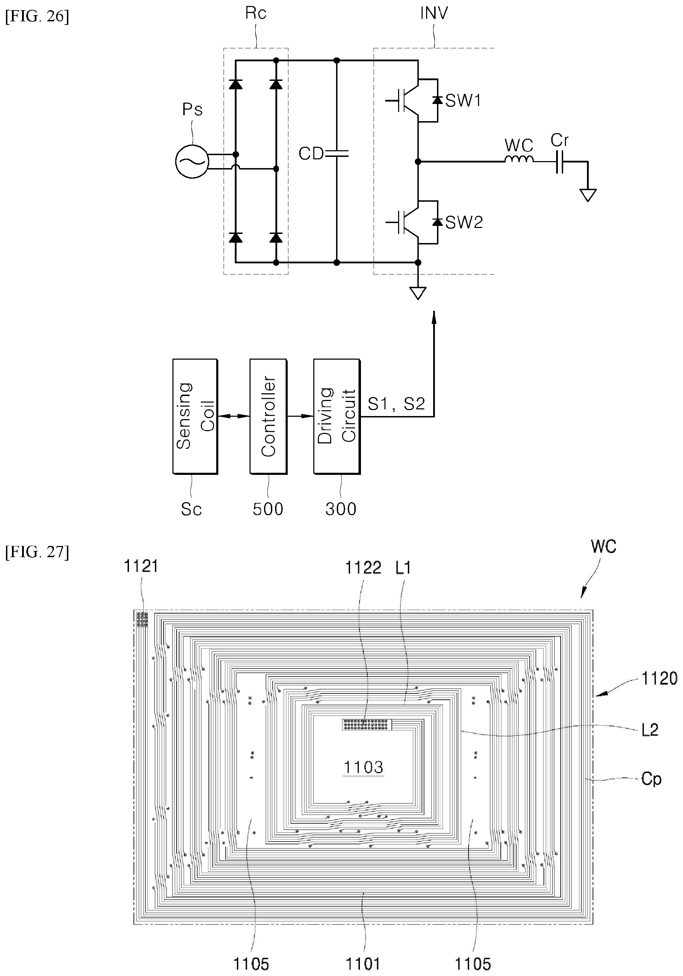

FIG. 25 is a block diagram schematically illustrating a power supply-related configuration of a home appliance according to an embodiment. FIG. 26 is a circuit diagram of a home appliance according to an embodiment.

Referring to FIG. 25, a home appliance according to an embodiment may include a control panel 130, a driving circuit 300, a load circuit 350, a controller 500, and a sensing coil SC.

The control panel 130 may be provided with a user interface including various icons for adjusting the operation of the cooktop 100 by touch, a display showing the operation state of the cooktop 100, and the like. The user may input through the control panel 130 a heating level which the user wants.

The load circuit 350 may include at least one working coil, at least one capacitor, and at least one relay. Here, at least one working coil, at least one capacitor, and at least one relay may be connected with each other selectively in series or in parallel.

The driving circuit 300 may supply a switching signal for driving an inverter included in the load circuit 350.

The home appliance according to an embodiment may further include a current measurement circuit 400. The current measurement circuit 400 may measure the resonance current Ir and the resonance voltage Vr of the load circuit 350 when the inverter included in the load circuit 350 is driven. The controller 500 may calculate an input current applied to the load circuit 350 with the use of the resonance current Ir and the resonance voltage Vr. The controller 500 may calculate an output power value of the working coil based on the input current, and determine a driving frequency of the inverter included in the load circuit 350 based on the calculated output power value and the heating level input through the control panel 130.

The controller 500 may supply to the driving circuit 300 a control signal corresponding to the determined driving frequency. The driving circuit 300 may generate a switching signal according to a control signal supplied from the controller 500, and supply the switching signal to the load circuit 350.

The controller 500 may determine whether a container is present on the top of the working coil by using the sensing coil SC. The controller 500 may supply current to the sensing coil SC for a predetermined time period. The controller 500 may determine whether a container is present on the top of a working coil or of which working coil a container is present on the top, based on a resonance signal which the sensing coil SC outputs by the supply of the current.

In an embodiment, the controller 500 may determine container information including at least one of the position, material, shape, and size of a container with the use of the sensing coil SC. The controller 500 may control at least one relay in the load circuit 350 according to the position of the container so that at least one working coil corresponding to the position of the container is activated.

Additionally, the controller 500 may determine or vary the switching frequency of the inverter according to at least one of the material, shape, and size of the container.

Referring to FIG. 26, a home appliance according to an embodiment may include a rectifying circuit Rc, a DC link capacitor CD, an inverter INV, a sensing coil SC, a controller 500, a driving circuit 300, a working coil WC, and a resonance capacitor Cr.

The rectifier circuit Rc may rectify an input voltage supplied from an external power source Ps and output the rectified voltage. The rectifier circuit Rc may be a circuit including a plurality of diodes (e.g., bridge circuit).

The DC link capacitor CD may smooth the voltage output from the rectifier circuit Rc, and output the smoothed voltage.

The inverter INV may output an alternating current with the use of the voltage output from the DC link capacitor CD. In an embodiment, the inverter INV may include a first switching element SW1 and a second switching element SW2. The first switching element SW1 and the second switching element SW2 may be turned on and turned off by a first switching signal S1 and a second switching signal S2 supplied by the driving circuit 300. The first switching element SW1 and the second switching element SW2 may be alternately turned on and turned off. In another embodiment, the inverter INV may include two or more switching elements.

The controller 500 may determine whether a container is present on the top of the working coil by using the sensing coil SC. The controller 500 may supply current to the sensing coil SC for a predetermined time period. The controller 500 may determine whether a container is present on the top of a working coil or of which working coil a container is present on the top, based on a resonance signal which the sensing coil SC outputs by the supply of the current.

The controller 500 may determine the driving frequency of the inverter included in the load circuit 350 based on the output power value of the working coil WC and the heating level input through the control panel 130. The controller 500 may supply to the driving circuit 300 a control signal corresponding to the driving frequency of the inverter INV. When the control signal is supplied to the driving circuit 300, the driving circuit 300 may output the switching signal S1, S2. When the first switching signal S1 and the second switching signal S2 are supplied to the inverter INV, the first switching element SW1 and the second switching element SW2 may be alternately turned on and turned off. Thereby, from the inverter INV an alternating current can be output. When the alternating current output from the inverter INV is supplied to the working coil WC, the container provided on the top of the working coil WC can be heated.

To one end of the working coil WC, a resonance capacitor Cr may be connected. When the alternating current is supplied to the working coil WC, a resonance phenomenon may occur due to the working coil WC, the resonance capacitor Cr, and the container.

In FIG. 26, only one working coil WC and one resonant capacitor Cr are shown as an example. However, in another embodiment, a home appliance may include a plurality of working coils and resonant capacitors.

### [Working coil shape]

FIG. 27 is a plan view showing a structure of a working coil according to an embodiment.

Referring to FIGS. 17 and 27, the working coil WC may be formed in a shape including a polygonal shape. For example, the horizontal direction outer shape of the working coil WC may be a polygonal shape. In other words, when the working coil WC is viewed from the top, the shape of the working coil WC may be a polygonal shape.

As an example, the outer shape of the working coil WC may be approximately rectangular. Also, the outer shape of the coil module 1001, 1003 including the working coil WC may be a polygonal shape. Further, the working coil WC may be formed by a conductor patterned on an insulating layer. For example, the working coil WC may be formed by a conductor patterned on an insulating layer, rather than a litz coil wound closely in a circular shape.

As the working coil WC is formed in the form of a pattern as described above, the outer shape of the working coil WC can be easily formed in a polygonal shape, more specifically, an approximately rectangular shape.

Additionally, since the outer shape of the working coil WC is formed in this form, the working coil WC can occupy an area very close to the edge of the coil module 1001, 1003, so that the density of the area occupied by the working coil WC in the coil module 1001, 1003 can be effectively increased.

Additionally, the horizontal direction outer shape of each first coil substrate portion 1100 (hereinafter, referred to as "the outer shape of the first coil substrate portion") may be a polygonal shape. For example, the outer shape of the first coil substrate portion 1100 may be substantially rectangular.

Additionally, the horizontal direction outer shape of the core 1110 forming the frame of each first coil substrate portion 1100 (hereinafter referred to as "the outer shape of the core") may be a polygonal shape, similar to the shapes of the coil module 1001, 1003 and the first coil substrate portion 1100.

As an example, the working coil WC may be formed in a rectangular spiral shape. For example, the working coil WC may be formed in a rectangular spiral shape in which a first straight line L1 in the first direction and a second straight line L2 in the second direction are alternately connected to each other. And the outer shape of the core 1110 of the first coil substrate portion 1100 forming the working coil WC may be formed in a rectangular shape similar to the outer shape of the working coil WC.

Accordingly, at least one of a plurality of outer sides of the working coil WC may include a straight line parallel to any one of a plurality of outer sides of the core 1110, which is closest thereto. For example, the first straight line L1 disposed at the forefront of the working coil WC may be formed as a straight line parallel to the front outer side of the core 1110, and the second straight line L2 disposed at the rightmost side of the working coil WC may be formed as a straight line parallel to the right outer side of the core 1110.

Since he outer shape of the core 1110 and the outer shape of the working coil WC are formed in the above-described form, the working coil WC can occupy an area very close to the edge of the coil module 1001, 1003, so that the density of the area occupied by the working coil WC in the coil module 1001, 1003 can be effectively increased.

Also, in one embodiment, each of the coil modules 1001, 1003 may include a plurality of working coils WC. That is, each of the coil modules 1001, 1003 may include an assembly of a plurality of working coils WC arranged in the horizontal direction. For example, each of the coil modules 1001, 1003 may be provided with an assembly of working coils WC including eight working coils WC arranged in the form of 2 columns by 4 rows along the horizontal direction.

In an embodiment, the outer shape of the assembly of the working coil WC may be a polygonal shape. That is, the outer shape of each of the coil modules 1001, 1003 and the outer shape of the assembly of the working coil WC provided in that coil module 1001, 1003 may all be a polygonal shape.

As an example, the assembly of the working coil WC may be disposed such that its outer shape is a rectangular shape. That is, a plurality of working coils WC provided in each of the coil modules 1001, 1003 may be disposed in a rectangular shape.

As another example, the outer shape of the working coil WC may be also a hexagonal shape. For example, the working coil WC may be formed in a hexagonal spiral shape. Therefore, a plurality of working coils may be disposed in a honeycomb shape in the coil module. By disposing a plurality of working coils WC, each of which is formed in a hexagonal spiral shape, in a honeycomb shape, the centers of all working coils WC can be maintained at equal intervals. For example, the working coil WC may be disposed so that the center distance from another adjacent working coil WC is maintained at a specified value.

As another example, the outer shape of the working coil may be a circular or elliptical shape. For example, the working coil may be formed in a spiral shape similar to a circular or elliptical shape. Even in this case, working coils may be disposed so that the centers of all working coils provided in the coil module may be maintained at equal intervals.

### [Structure of sensing coil]

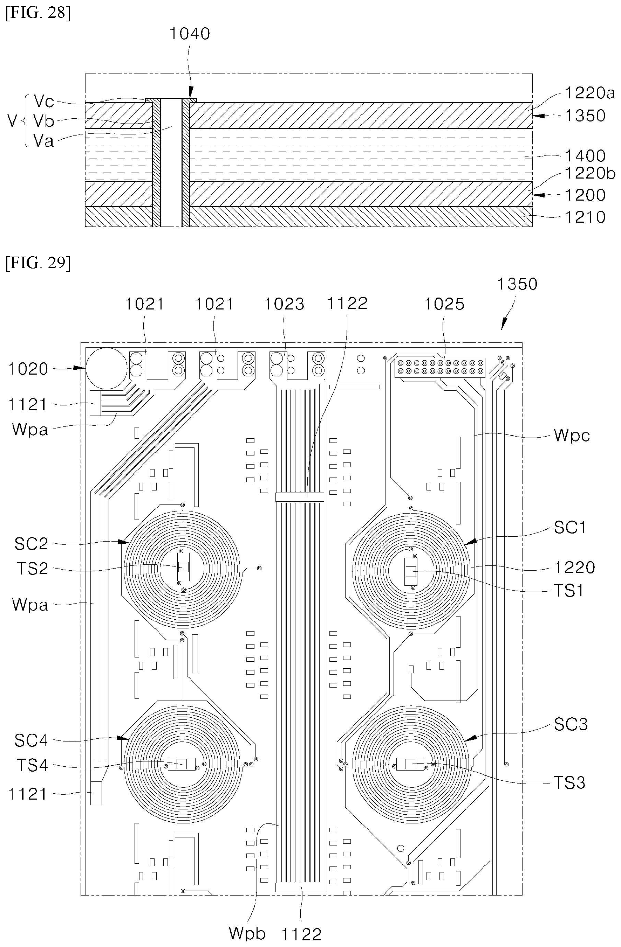

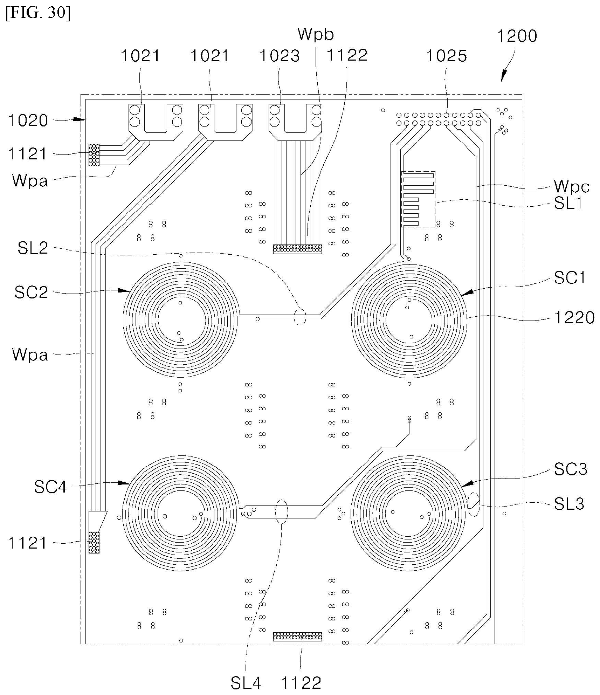

FIG. 28 is a cross-sectional view showing an example of a stacked structure of a second outer layer part and a second coil substrate portion. FIG. 29 is a plan view showing an illustrative structure of a second coil portion disposed on an outermost surface of the coil module shown in FIG. 28. FIG. 30 is a plan view showing an illustrative structure of a second coil portion disposed on the bottom of the adhesive material shown in FIG. 28.

Referring to FIG. 7, the sensing coil SC may be formed by a second coil portion 1220 included in the second coil substrate portion 1200. Each sensing coil SC may be formed by one second coil portion 1220, or may be formed as a result of connecting a plurality of second coil portions 1220 stacked in the up and down directions to each other in the up and down directions.

As an example, the sensing coil SC may be disposed in the upper side of the working coil WC. And each of the second coil substrate portions 1200 may include a core 1210 and a second coil portion 1220. Additionally, each of the second coil substrate portions 1200 may further include a first coil portion 1120.

The second coil portion 1220 may be disposed on at least one of one side and the other side of the core 1210 in the up and down directions. For example, when the second coil substrate portion 1200 includes both the first coil portion 1120 and the second coil portion 1220, the first coil portion 1120 may be disposed on one side of the core 1210 in the up and down directions, and the second coil portion 1220 may be disposed on the other side of the core 1210 in the up and down directions. For example, the first coil portion 1120 may be provided in a patterned form in the lower side of the core 1210, and the second coil portion 1220 may be provided in a patterned form in the upper side of the core 1210.

When the second coil substrate portion 1200 includes only the core 1210 and the second coil portion 1220, the second coil portion 1220 may be disposed in each of both sides of the core 1210 in the up and down directions. For example, each second coil substrate portion 1200 may be provided in a form in which the second coil portions 1220 are formed on both sides of the core 1110 in the up and down directions, respectively, as a layer. Similarly to the first coil portion 1120, the second coil portions 1220 may be provided in a form patterned on both sides of the core 1210 in the up and down directions.

Hereinafter, each second coil substrate portion 1200 will be illustrated as including a core 1210, a first coil portion 1120, and a second coil portion 1220, wherein the first coil portion 1120 is provided in a form patterned on the lower side of the core 1210, and the second coil portion 1220 is provided in a form patterned on the upper side of the core 1210.

In the upper side of the second coil substrate portion 1200, the second outer layer part 1350 may be disposed. Similar to the second coil substrate portion 1200, the second outer layer part 1350 may include a second coil portion 1220. For example, as illustrated in FIG. 28, an adhesive material 1400 may be stacked on the top of the second coil substrate portion 1200, and a second coil portion 1220a may be stacked on the top of the adhesive material 1400. The second coil portion 1220b included in the second coil substrate portion 1200 and the second coil portion 1220a included in the second outer layer part 1350 may be connected to each other in the up and down directions to form one sensing coil SC.

Additionally, each of the second coil substrate portion 1200 and the second outer layer part 1350 may have a plurality of second coil portions 1220 arranged in the horizontal direction, and accordingly, the coil module 1001, 1003 may include a plurality of sensing coils SC arranged in the horizontal direction.

In each of the coil modules 1001, 1003, the sensing coil SC may be disposed in the outer side of the first coil substrate portion 1100 in the up and down directions. For example, the sensing coil SC may be disposed in the upper side or lower side of the first coil substrate portion 1100.

As another example, the sensing coil SC may be disposed in the lower side of the working coil WC. In this case, the second coil substrate portion 1200 may be disposed in the lower side of the first coil substrate portion 1100, and the second coil portion 1220 may be disposed in the lower side of the core 1210. Additionally, the outer layer part 1300, 1350 formed in a form the same as or similar to the second coil portion 1220 may be disposed in the lower side of the second coil portion 1220, and be connected with the second coil portion 1220 in the up and down directions.

As still another example, the sensing coil SC may be disposed in the inside of the working coil WC. In this case, at least one first coil substrate portion 1100 may be disposed in the lower side of the second coil substrate portion 1200, and at least one first coil substrate portion 1100 may be disposed also in the upper side of the second coil substrate portion 1200. Thereby, the sensing coil SC can be disposed between the stacked bodies of the first coil substrate portions 1100, so that it can be disposed in the inside of the working coil WC formed by the stacked bodies of the first coil substrate portions 1100.

In an embodiment, the coil assembly 1000 may further include a connecting part 1040. The connecting part 1040 can connect a coil substrate-stacked body 1010 in the up and down directions, which has a second coil substrate portion 1200 and a second outer layer part 1350 stacked in the up and down directions, or which has a plurality of second coil substrate portions 1200 stacked in the up and down directions.

Each of the coil modules 1001, 1003 may include a plurality of connecting parts 1040. Each of the connecting parts 1040 may connect, in the up and down directions, a plurality of second coil portions 1220 to each other, which are arranged on the same straight line in the up and down directions.

As an example, in a case where the second outer layer part 1350 is stacked in the upper side of the second coil substrate portion 1200 in the coil substrate-stacked body 1010, each connecting part 1040 can penetrate the second outer layer part 1350 and the second coil substrate portion 1200 in the up and down directions, and can connect the second coil portions 1220 to each other in the up and down directions. In this case, each sensing coil SC can be formed as a result of the second coil portions 1220 of the second coil substrate portion 1200 and the second outer layer part 1350 being connected to each other in the up and down directions by the connecting part 1040.

As another example, in a case where a plurality of the second coil portions 1220 are stacked in each coil substrate-stacked body 1010 in the up and down directions, each connecting part 1040 can penetrate the plurality of second coil substrate portions 1200 in the up and down directions, and can connect the second coil portions 1220 to each other in the up and down directions. In this case, each sensing coil SC can be formed as a result of the second coil portions 1220 of a plurality of the second coil substrate portion 1200 stacked in the up and down directions being connected to each other in the up and down directions by the connecting part 1040.

The connecting part 1040 may be disposed in an area of the second coil substrate portion 1200, in which the first coil portion 1120 is not disposed, and may be connected with the second coil portion 1220 or the outer layer part 1300, 1350 in the horizontal direction. Each of the connecting parts 1040 may include a via V.

Each via V may connect, in the up and down directions, an outer layer part 1300, 1350 and a second coil portion 1220 to each other, which are arranged on the same straight line in the up and down directions. Each via may be disposed in an area of the second coil substrate portion 1200, in which the first coil portion 1120 is not disposed, and may be connected with the second coil portion 1220 or the outer layer part 1300, 1350 in the horizontal direction.

Each via V may include a hole portion Va, an inner wall portion Vb, and a land portion Vc. The hole portion Va may be formed in the form of a hole penetrating at least a portion of the coil substrate-stacked body 1010 in the up and down directions. The hole portion Va may penetrate, in the up and down directions, an area of the coil substrate-stacked body 1010, in which the first coil substrate portion 1100 is stacked.

The inner wall portion Vb is disposed in the inside of the hole portion Va, and may connect, in the up and down directions, a plurality of coil patterns Cp to each other, which are stacked in the up and down directions. The inner wall portion Vb may include a conductor disposed in the hole portion Va, and may electrically connect a plurality of coil patterns Cp stacked in the up and down directions. As an example, the inner wall portion Vb may be formed in the form of a copper foil that is plated on the inner wall of the first coil substrate portion 1100 surrounding the hole portion Va.

The land portion Vc may electrically connect the inner wall portion Vb with a coil pattern Cp. The land part Vc may be formed in the form of a copper foil plated on the top surface or the bottom surface of the first coil substrate portion 1100, and may be electrically connected to each of the inner wall portion Vb and the coil pattern Cp.

FIG. 29 is a plan view showing an illustrative structure of a second coil portion 1220a disposed on an outermost surface of the coil module shown in FIG. 28. Also, FIG. 30 is a plan view showing an illustrative structure of a second coil portion disposed on the bottom of the adhesive material 1400 shown in FIG. 28.

Referring to FIGS. 29 and 30, a plurality of sensing coils SC1, SC2, SC3, SC4, ..., and a plurality of wiring patterns Wpa, Wpb, Wpc connected with the respective sensing coils may be formed in the second coil portion 1220a disposed on the outermost surface of the coil module according to an embodiment and the second coil portion 1220b disposed in the lower side of the second coil portion 1220a. In the center of each of the sensing coils SC1, SC2, SC3, SC4, ..., a temperature sensor TS1, TS2, TS3, TS4, ... may be disposed. Additionally, in the second coil portion 1220a and the second coil portion 1220b, a terminal unit 1020 may be formed for electrical connection between a power supply unit (not shown) and the working coil or between a power supply unit and the sensing coil SC1, SC2, SC3, SC4, ....

For reference, only some SC1, SC2, SC3, SC4 of a plurality of sensing coils included in the coil module are illustrated in FIGS. 29 and 30.

The terminal part 1020 may include a first terminal 1021. The first terminal 1021 may be connected with the fourth terminal 1121. The first terminal 1021 may be connected with the working coil WC through the fourth terminal 1121.

The terminal part 1020 may include a second terminal 1023. The second terminal 1023 is connected with the fifth terminal 1122. The second terminal 1023 may be connected with the working coil WC through the fifth terminal 1122.

The terminal part 1020 may include a third terminal 1025. The third terminal 1025 may connect the sensing coil SC with the power supply unit.

In the second coil portion 1220a and the second coil portion 1220b, a first wiring pattern Wpa, a second wiring pattern Wpb, and a wiring pattern Wpc may be formed.

The first wiring pattern Wpa may electrically connect the first terminal 1021 with the fourth terminal 1121.

The second wiring pattern Wpb may electrically connect the second terminal 1023 with the fifth terminal 1122.

The wiring pattern Wpc may electrically connect each of the sensing coils SC1, SC2, SC3, SC4 with the third terminal 1025. For example, the wiring pattern Wpc may include a first wiring SL1 electrically connecting the first sensing coil SC1 with the third terminal 1025, a second wiring SL2 electrically connecting the second sensing coil SC2 with the third terminal 1025, a third wiring SL3 electrically connecting the third sensing coil SC3 with the third terminal 1025, and a fourth wiring SL4 electrically connecting the fourth sensing coil SC4 to the third terminal 1025.

In an embodiment, each of the wirings SL1, SL2, SL3, SL4 included in the wiring pattern Wpc may be formed to have the same thickness (e.g., 1oz or 2oz).

Meanwhile, each of the sensing coils SC1, SC2, SC3, SC4 may be disposed in a matrix form. And the third terminal 1025 connected to each of the sensing coils SC1, SC2, SC3, SC4 may be disposed in one side of each of the sensing coils SC1, SC2, SC3, SC4. Therefore, the distances between the respective sensing coils SC1, SC2, SC3, SC4 and the third terminal 1025 may be different from each other. Accordingly, the lengths of the respective wirings SL1, SL2, SL3, SL4 connecting the respective sensing coils SC1, SC2, SC3, SC4 with the third terminal 1025 may be different. For example, the length of the first wiring SL1 electrically connecting the first sensing coil SC1 with the third terminal 1025 may be shorter than the length of the wiring SL3 electrically connecting the third sensing coil SC3 with the third terminal 1025.

As described above, when the lengths of the respective wirings SL1, SL2, SL3, SL4 are different from each other, the resistances (or resistance values) of the respective wirings SL1, SL2, SL3, SL4 may be different from each other. This is because the resistance of the wiring is proportional to the length of the wiring and inversely proportional to the width of the wiring. Due to the difference in resistance between the wirings SL1, SL2, SL3, SL4, there may be a difference in the container detection performances of the respective sensing coils SC1, SC2, SC3, SC4 in the container detection process using the respective sensing coils SC1, SC2, SC3, SC4.

To solve this problem, the widths of the respective wirings SL1, SL2, SL3, SL4 may be set to be proportional to the lengths of the respective wirings SL1, SL2, SL3, SL4.

In an illustrative embodiment, the lengths of the respective wirings SL1, SL2, SL3, SL4 connected between the third terminal 1025 and the respective sensing coils SC1, SC2, SC3, SC4 may be as follows.

**[Table 1]**

| **Wiring** | **Length (mm)** |
|---|---|
| SL1 | 75 |
| SL2 | 100 |
| SL3 | 142 |
| SL4 | 182 |

When the first wiring SL1 among the four wirings is set as the reference wiring, the ratios of the lengths of other wirings to the length of the first wiring SL1 may be calculated as follows.

**[Table 2]**

| **Wiring** | **Ratio** |
|---|---|
| SL1 | 1.0 |
| SL2 | 1.3 |
| SL3 | 1.9 |
| SL4 | 2.4 |

According to this, the widths of the respective wirings SL1, SL2, SL3, SL4 may be set as values obtained by multiplying the width of the reference wiring SL1 by the ratios of the respective wirings as follows.

**[Table 3]**

| **Wiring** | **Width (mm)** |
|---|---|
| SL1 | 0.3 |
| SL2 | 0.39 |
| SL3 | 0.57 |
| SL4 | 0.72 |

In this way, the widths of the respective wirings SL1, SL2, SL3, SL4 may be set to values obtained by multiplying the ratios of the lengths of the respective wirings to the length of the predetermined reference wiring (e.g., the first wiring SL1) by the width of the reference wiring (e.g., 0.3).

In an embodiment, the widths of the respective wirings SL1, SL2, SL3, SL4 may be set to be proportional to the lengths of the respective wirings.

In an embodiment, the lengths of the respective wirings SL1, SL2, SL3, SL4 or the widths of the respective wirings SL1, SL2, SL3, SL4 may be set differently according to the distances between the third terminal 1025 and the respective sensing coils SC1, SC2, SC3, SC4.

In an embodiment, the lengths of the respective wirings SL1, SL2, SL3, SL4 or the widths of the respective wirings SL1, SL2, SL3, SL4 may be proportional to the distances between the third terminal 1025 and the respective sensing coils SC1, SC2, SC3, SC4.

This is merely an embodiment, and the reference wiring may be set differently depending on an embodiment. Additionally, the lengths of the respective wirings SL1, SL2, SL3, SL4 and the widths of the respective wirings SL1, SL2, SL3, SL4 according to the lengths may vary depending on an embodiment.

According to the above embodiments, the resistance values of the respective wirings SL1, SL2, SL3, SL4 electrically connecting the third terminal 1025 with the respective sensing coils SC1, SC2, SC3, SC4 can be equalized. Therefore, when the container detection is performed with the use of the respective sensing coils SC1, SC2, SC3, SC4, uniformity of the container detection performances of the respective sensing coils SC1, SC2, SC3, SC4 can be guaranteed.

### [Embodiment of coil module with coating layer applied thereon]

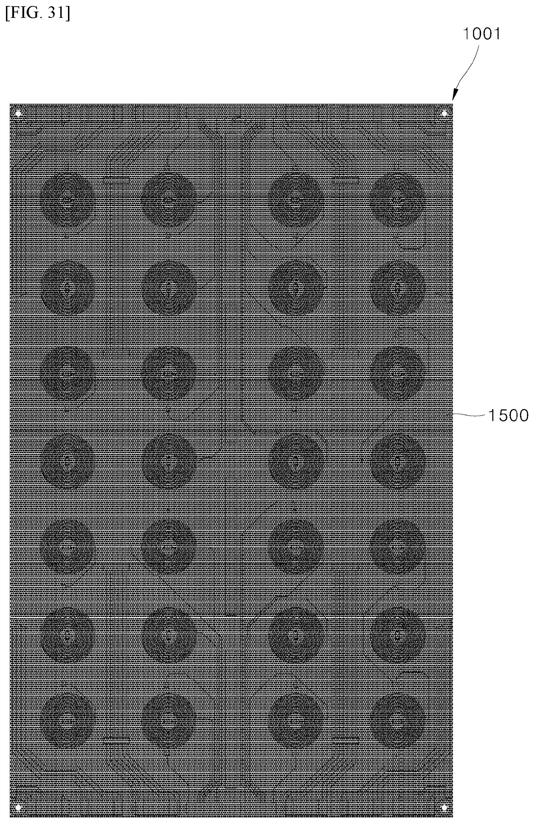

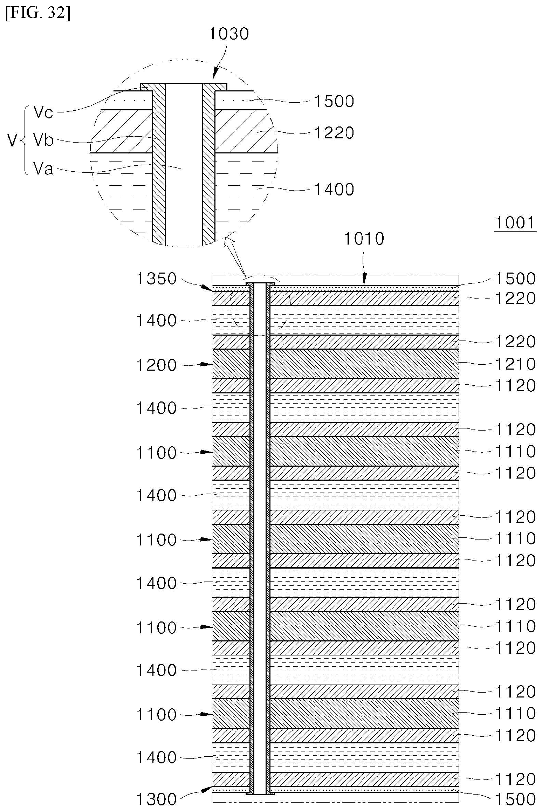

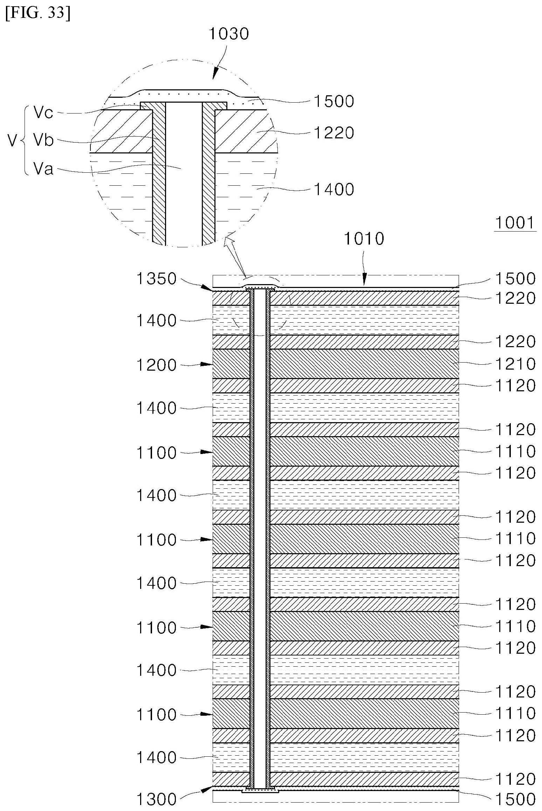

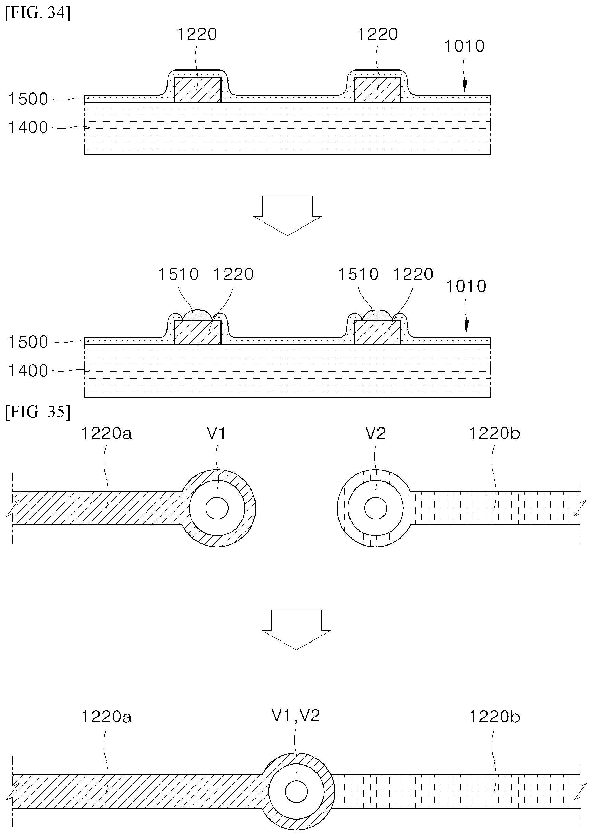

FIG. 31 is a view illustrating a state in which an insulating coating layer is covered on an outermost surface of a coil module according to an embodiment. FIG. 32 is a cross-sectional view illustrating an example of a stacked structure of the coil module shown in FIG. 31. FIG. 33 is a cross-sectional view illustrating another example of a stacked structure of the coil module shown in FIG. 31. FIG. 34 is a view illustrating a process of forming an insulating coating layer and a conductive coating layer on an outermost surface of a coil module according to an embodiment.

Referring to FIGS. 31 to 33, on the outermost surfaces of the coil module 1001, 1003 according to an embodiment in the up and down directions, insulating coating layers 1500 may be coated or stacked. That is, the insulating coating layer 1500 may cover each of the top surface and bottom surface of the coil module 1001, 1003. The insulating coating layer 1500 may form an outer surface of the coil module 1001, 1003. The insulating coating layer 1500 may be an insulating/heat-resistant covering that protects circuit patterns (e.g., coil portion 1120, 1220 or wiring pattern Wpa, Wpb, Wpc) disposed on the top surface and bottom surface of the coil module 1001, 1003.

The insulating coating layer 1500 may be formed of an insulating material. In an embodiment, the insulating coating layer 1500 may be formed by solder resist printed on the outermost surface of the coil substrate-stacked body 1010 in the up and down directions. As an example, by curing a photo solder resist ink printed on the upper end surface and lower end surface of the coil module 1001, 1003 by ultraviolet rays, the insulating coating layer 1500 may be formed.

As shown in FIG. 32, the insulating coating layer 1500 in accordance with an embodiment may be coated or stacked before the via V is formed in the coil module 1001, 1003. That is, the via V may be formed after the insulating coating layer 1500 is first coated or stacked on the outer surfaces of the coil substrate-stacked body 1010 in the up and down directions. According to the embodiment, a portion of the via V, for example, the land portion Vc, may be exposed to the outside from the surface of the insulating coating layer 1500.

As shown in FIG. 33, the insulating coating layer 1500 in accordance with another embodiment may be coated or stacked after the via V is formed in the coil module 1001, 1003. That is, after the via V is first formed in the coil substrate-stacked body 1010, the insulating coating layer 1500 may be coated or stacked on the outer surfaces of the coil substrate stack 1010 in the up and down directions. According to this embodiment, the via V may be covered by the insulating coating layer 1500.

Referring to FIG. 34, an insulating coating layer 1500 may be formed on an outermost surface of the coil substrate stack 1010. Furthermore, on the outermost surface of the coil substrate stack 1010, a conductive coating layer 1510 may be formed, which covers at least a portion of the second coil portion 1220.

As shown in FIGS. 7, and 28 to 30, a wiring pattern including a plurality of sensing coils and a plurality of wirings may be formed in the second coil portion 1220. In an embodiment, the conductive coating layer 1510 may cover at least a portion of a plurality of sensing coils or a plurality of wirings formed in the second coil portion 1220.

For example, as shown in FIG. 34, the insulating coating layer 1500 covering the entire outermost surface of the coil substrate stack 1010 may be coated or stacked first. Accordingly, the plurality of sensing coils and the plurality of wirings formed in the second coil portion 1220 may be covered by the insulating coating layer 1500.

Subsequently, a portion of the insulating coating layer 1500, that is, the insulating coating layer 1500 covering the plurality of sensing coils or the plurality of wirings, may be removed. Thereby, the plurality of sensing coils and the plurality of wirings formed in the second coil portion 1220 can be exposed to the outside.

Subsequently, the conductive coating layer 1510 may be coated or stacked on the plurality of sensing coils or the plurality of wirings formed in the second coil portion 1220, which are exposed to the outside. Accordingly, at least a portion of the plurality of sensing coils and the plurality of wirings formed in the second coil portion 1220 can be covered by the conductive coating layer 1510.

The conductive coating layer 1510 may be formed of a conductive material such as metal. Accordingly, the plurality of sensing coils or the plurality of wirings are covered with the conductive coating layer 1510, the resistances (or resistance values) of the plurality of sensing coils or the plurality of wirings are effectively reduced. As the resistances of the plurality of sensing coils or the plurality of wirings are reduced, less power is consumed when the container detection is performed using of the sensing coil, thereby effectively increasing the power efficiency of the coil module and the home appliance including the coil module.

### [Electrical connection structure between second coil portions]

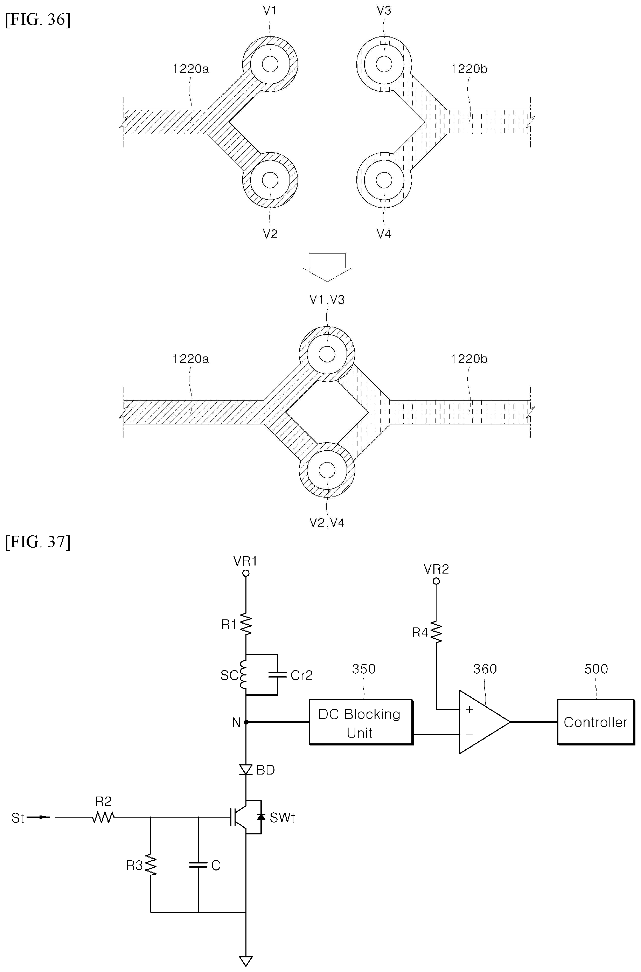

FIG. 35 is a view showing an electrical connection structure between second coil portions disposed on different layers according to an embodiment. FIG. 36 is a view showing an electrical connection structure between second coil portions disposed on different layers according to another embodiment.

The coil module according to an embodiment may include two or more second coil portions disposed on different layers. For example, as illustrated in FIG. 28, the coil module may include a second coil portion 1220a disposed on the outermost surface of the coil module and a second coil portion 1220b disposed on the bottom of the adhesive material 1400 stacked on the bottom of the second coil portion 1220a.

The sensing coil or wiring formed in the second coil portion 1220a may be electrically connected by the via V with the sensing coil or wiring formed in the second coil portion 1220b disposed on a different layer from the second coil portion 1220a. For example, as shown in FIG. 35, the first via V1 formed at one end of the wiring formed in the second coil portion 1220a and the second via V2 formed at one end of the wiring formed in the second coil portion 1220b overlap and contact each other to form one via, so that the wiring formed in the second coil portion 1220a and the wiring formed in the second coil portion 1220b can be electrically connected with each other.

Each of the vias V1 and V2 shown in FIG. 35 may be made of a conductive material such as metal. Therefore, the resistance (or resistance value) of the sensing coil or wiring formed in the second coil portion 1220a or the second coil portion 1220b may increase due to the via V1, V2.

In order to reduce the resistance of the sensing coil or wiring caused by the via V1, V2, the second coil portions 1220a and 1220b disposed on different layers in the coil module according to another embodiment may be electrically connected with each other by a plurality of vias.

For example, as shown in FIG. 36, the first via V1 formed at one end of the wiring formed in the second coil portion 1220a may overlap and contact the third via V3 formed at one end of the wiring formed in the second coil portion 1220b, thereby forming one via. Additionally, the second via V2 formed at one end of the wiring formed in the second coil portion 1220a may overlap and contact the fourth via V4 formed at one end of the wiring formed in the second coil portion 1220b, thereby forming one via. Accordingly, the wiring formed in the second coil portion 1220a and the wiring formed in the second coil portion 1220b may be electrically connected by two vias V1, V3, and V2, V4 that are distinguished from each other. In an embodiment, the wiring formed in the second coil portion 1220a and the wiring formed in the second coil portion 1220b may be connected in parallel with each other.

FIG. 36 illustrates an embodiment in which the second coil portions 1220a, 1220b disposed on different layers are electrically connected with each other by two vias V1, V3, and V2, V4. However, in other embodiments, the second coil portions 1220a, 1220b disposed on different layers may be electrically connected with each other by three or more vias.

According to the above-described embodiment, it is possible to effectively reduce the resistance (or resistance value) of a plurality of sensing coils or a plurality of wirings formed in the second coil portion. As the resistances of the plurality of sensing coils or the plurality of wirings are reduced, less power is consumed when the container detection is performed using of the sensing coil, thereby effectively increasing the power efficiency of the coil module and the home appliance including the coil module.

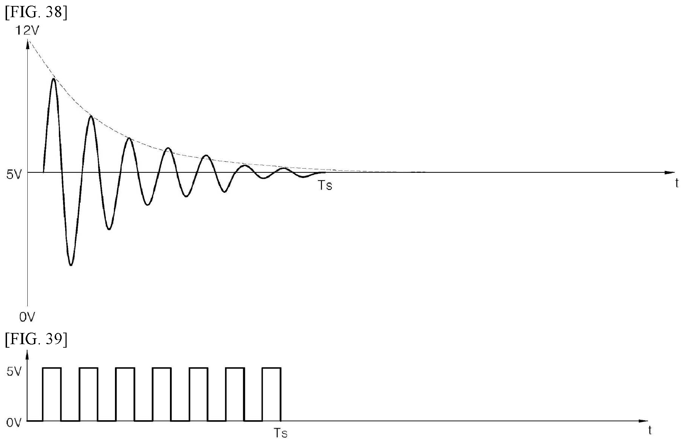

FIG. 37 is a circuit diagram of a sensing circuit according to an embodiment. FIG. 38 is a diagram illustrating a waveform of a resonance signal output from an output node of a sensing circuit according to an embodiment. FIG. 39 is a diagram illustrating a waveform of a square wave output from a comparator of a sensing circuit according to an embodiment.

In an embodiment, the controller 500 may perform container detection with the use of the sensing circuit shown in FIG. 37.

Referring to FIG. 37, a sensing circuit according to an embodiment may include a sensing coil SC, a resonance capacitor Cr2 connected in parallel with the sensing coil SC, a switching element SWt connected with the sensing coil SC and the resonance capacitor Cr2, and a comparator 360 comparing a resonance signal output from the output node N with a predetermined reference signal and outputting a square wave.

When the container detection starts, the controller 500 may turn on the switching element SWt for a predetermined charging time. Thereby, the first power voltage VR1 and the ground terminal can be electrically connected with each other, so that a voltage can be applied to the sensing coil SC and the resonance capacitor Cr2.

When the predetermined charging time has elapsed, the controller 500 may turn off the switching element SWt. Thereby, a resonance phenomenon can occur by the sensing coil SC and the resonance capacitor Cr2.

When the resonance phenomenon occurs by the sensing coil SC and the resonance capacitor Cr2, a resonance signal may be output through the output node N. FIG. 38 is a diagram illustrating a waveform of a resonance signal output from an output node of a sensing circuit according to an embodiment.

In an embodiment, the sensing circuit may further include a DC blocking unit 350 for removing a DC component from the resonance signal output from the output node N. In another embodiment, the DC blocking unit 350 may be omitted.

The resonance signal output from the output node N may be input to the comparator 360. The comparator 360 may output a square wave by comparing the resonance signal with a reference signal defined by a second power voltage VR2. FIG. 39 is a diagram illustrating a waveform of a square wave output from a comparator of a sensing circuit according to an embodiment.

More specifically, the comparator 360 may compare the voltage magnitude of the reference signal generated by the second power voltage VR2 with the voltage magnitude of the resonance signal output from the output node N, and may output a square wave according to the comparison result. For example, if the voltage magnitude of the resonance signal output from the output node N is greater than or equal to the voltage magnitude of the reference signal, the comparator 360 may output a signal having a voltage magnitude of the first level (e.g., 5V), and if the voltage magnitude of the resonance signal is less than the voltage magnitude of the reference signal, the comparator 360 may output a signal having a voltage magnitude of the second level (e.g., 0V).

The controller 500 may count the number of waveforms in the square wave output from the comparator 360, and determine whether a container is present on the top of the sensing coil SC based on the counted number of waveforms in the square wave.

When a container is present on the top of the sensing coil SC, the impedance of the sensing coil SC and the resonance capacitor Cr2 is maintained relatively high compared to when a container is not present. Therefore, the resonance signal can be attenuated and then dissipated over a relatively short period of time. Conversely, when there is no container on the top of the sensing coil SC, the impedances of the sensing coil SC and the resonance capacitor Cr2 are maintained relatively low compared to when a container is present. Therefore, the resonance signal can be attenuated and then dissipated over a relatively long period of time.

As a result, the number of waveforms in the square wave output by the comparator 360 when there is no container on the top of the sensing coil SC is greater than the number of waveforms in the square wave output by the comparator 360 when there is a container on the top of the sensing coil SC.

Therefore, the controller 500 can determine that a container is present on the top of the sensing coil SC if the counted number of waveforms in the square wave is less than or equal to a predetermined reference value. Conversely, the controller 500 can determine that there is no container on the top of the sensing coil SC if the counted number of waveforms in the square wave exceeds a predetermined reference value. The reference value is a value that may be set differently according to an embodiment.

In an embodiment, the controller 500 may sequentially perform the container detection on each sensing coil SC. Therefore, while the container detection is performed for one sensing coil SC, the remaining sensing coils SC may be maintained in a discharged state.

The embodiments described with reference to the drawings so far are merely exemplary, and a person having ordinary skill in the art to which the relevant technology belongs will understand that implementations of various modifications or other equivalent embodiments are possible from these embodiments. Additionally, even if effects of configurations have not been explicitly described when describing the embodiments, other predictable effects by the corresponding configuration should also be recognized.

## Claims

1. A coil module comprising:
a plurality of sensing coils formed by a plurality of second coil portions stacked in up and down directions; and
a plurality of wirings electrically connecting a third terminal with the respective sensing coils,
wherein a width of each of the wirings is set to be proportional to a length of each of the wirings.

2. The coil module of claim 1, wherein the width of each of the wirings is set as a value obtained by multiplying a ratio of a length of each of the wirings to a length of a predetermined reference wiring by a width of the reference wiring.

3. The coil module of claim 1, wherein the length or the width of each of the wirings is set differently according to a distance between the third terminal and each of the sensing coils.

4. The coil module of claim 1, wherein the length or the width of each of the wirings is proportional to a distance between the third terminal and each of the sensing coils.

5. The coil module of claim 1, further comprising:
a conductive coating layer covering at least a portion of the plurality of sensing coils or the plurality of wirings disposed on an outermost surface of the coil module; and
an insulating coating layer covering a remaining portion in the outermost surface of the coil module except for the plurality of sensing coils or the plurality of wirings.

6. The coil module of claim 5, wherein the conductive coating layer is formed after the insulating coating layer is formed on the outermost surface of the coil module and the insulating coating layer covering the plurality of sensing coils or the plurality of wirings is removed.

7. The coil module of claim 1, wherein the respective second coil portions formed on different layers are electrically connected with each other by a plurality of vias electrically separated from each other.

8. The coil module of claim 7, wherein the respective second coil portions formed on different layers are connected in parallel by the plurality of vias.

9. The coil module of claim 1, wherein the plurality of wirings are disposed on a same layer as the sensing coil.

10. A home appliance comprising a coil module, wherein the coil module includes:
a plurality of working coils formed by a plurality of first coil portions stacked in up and down directions;
a plurality of sensing coils formed by a plurality of second coil portions stacked in up and down directions;
a plurality of first wiring patterns electrically connecting a first terminal with the respective working coils;
a plurality of second wiring patterns electrically connecting a second terminal with the respective working coils; and
a plurality of third wiring patterns electrically connecting a third terminal with the respective sensing coils, and
wherein a width of each wiring included in each of the third wiring patterns is set to be proportional to a length of each of the wirings.

11. The home appliance of claim 10, wherein the width of each wiring included in each of the third wiring patterns is set as a value obtained by multiplying a ratio of the length of each wiring to a length of a predetermined reference wiring by a width of the reference wiring.

12. The home appliance of claim 10, wherein a length or the width of each wiring included in each of the third wiring patterns is set differently according to a distance between the third terminal and each of the sensing coils.

13. The home appliance of claim 10, wherein the length or the width of each wiring included in each of the third wiring patterns is proportional to a distance between the third terminal and each of the sensing coils.

14. The home appliance of claim 10, further comprising:
a conductive coating layer covering at least a portion of the plurality of sensing coils or the plurality of wirings disposed on an outermost surface of the coil module; and
an insulating coating layer covering a remaining portion in the outermost surface of the coil module except for the plurality of sensing coils or the plurality of wirings.

15. The method for controlling a camera setting value depending on an open state of a door according to claim 14, wherein the conductive coating layer is formed after the insulating coating layer is formed on the outermost surface of the coil module and the insulating coating layer covering the plurality of sensing coils or the plurality of wirings is removed.

16. The home appliance of claim 10, wherein the respective second coil portions formed on different layers are electrically connected with each other by a plurality of vias.

17. The cooking appliance according to claim 16, wherein the respective second coil portions formed on different layers are connected in parallel by the plurality of vias.

18. The home appliance of claim 10, wherein each wiring included in each of the third wiring patterns is disposed on a same layer as the sensing coil.
